(19)

Europäisches
Patentamt
European
Patent Office
Office européen
des brevets

(11) **EP 2 234 026 A1**

(12) **EUROPEAN PATENT APPLICATION**

(43) Date of publication:
**29.09.2010 Bulletin 2010/39**

(51) Int Cl.:
***G06F 17/50*** *(2006.01)*

(21) Application number: **10157462.2**

(22) Date of filing: **24.03.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA ME RS** | • **Dobrovolny, Petr**<br>**603 00, Brno (CZ)**<br>• **Corbalan, Miguel Miranda**<br>**3010, Kessel-Lo (BE)**<br>• **Anchlia, Ankur**<br>**Indore (IN)** |
| (30) Priority: **25.03.2009 US 163390 P** | (74) Representative: **Hertoghe, Kris Angèle Louisa et al**<br>**DenK iP bvba**<br>**Hundelgemsesteenweg 1114**<br>**9820 Merelbeke (BE)** |
| (71) Applicant: **IMEC**<br>**3001 Leuven (BE)** | |
| (72) Inventors:<br>• **Zuber, Paul**<br>**85649 Brunnthal (DE)** | |

(54) **Method and system for analyzing performance metrics of array type circuits under process variability**

(57)    A method for analyzing a performance metric of an array type of electronic circuit under process variability effects is a two-step method which comprises a first step (20) of deriving statistics of the access path (model of the array type of electronic circuit, comprising building blocks containing all hardware to access one array element in the array) due to variations in the building blocks under process variability of the basic elements, and a second step (21) of deriving statistics of the full array type of electronic circuit by combining the results of the statistics of the access path under awareness of the array architecture.

FIG. 2

**Description**

**FIELD OF THE INVENTION**

The invention relates to a method for analyzing a performance metric of an electronic circuit, in particular an array type of electronic circuit, such as for example a memory or an image sensor, under process variability effects. In particular embodiments, the present invention relates to analyzing performance metrics of memories. The present invention also relates to a corresponding system and to software for carrying out the method.

**BACKGROUND OF THE INVENTION**

With decreasing physical dimensions, such as 65 nm and below, dopant atoms have become countable, and no process can for example implant a few atoms on the same position in a device, for example in the channel of a transistor, when looking from device to device. This leads to purely random variations between transistors. This may be problematic for electronic circuits in general, and is particularly problematic for array type of circuits such as for example memories, because of their high density requirements, meaning high count of variability-sensitive small devices.

Unfortunately, for array types of electronic circuits, such as memories, virtually no commercially available solutions to predict the effect of process variations on yield exist today, and the designer has to resort to additional Silicon runs at the expense of development time and cost or has to set overly-pessimistic margins at the expense of product quality. Several issues make array types of circuits, e.g. memories, especially challenging.

Engineers reduce the nominal simulation of a full array, e.g. a full memory, to the critical path, assuming every other path behaves the same. However, this approach particularly fails under local process variability where device-to-device uncorrelated variations make access operations to every cell in the array, e.g. to every bitcell in a memory, to behave differently. Since an array such as a memory is as good as its worst path, the array statistics comprises the distribution of the worst of all paths. As a result, simulating the critical-path-netlist under variability does not model the full array statistics correctly.

Works considering the array cell, e.g. bitcell, alone without its periphery manage to reduce the sample sizes and transistor counts effectively, but also entail incomplete analysis. Several stability criterions depend not only on the cell but also on all other parts of the array. For instance in case of memories, the read operation of the cell is affected not only by the cell's capability to discharge the bitline but also by variations on the sense-amplifier offset, the timing-circuit that controls its activation, and the row-decoder that enables the wordline activation. Accounting for the bitcell only would lead to optimistic estimations of the read-voltage variability.

On top of that, designers must pay attention to architectural correlations of different parts of the array, for example in case of memories of bitcells, sense-amplifiers and other memory parts. A worst-case cell instance is not necessarily in the same path with the worst-case sense-amplifier or the worst-case row driver logic, so that a blind worst-case combination would lead to over-pessimistic results. Combining for the worst-case situation of each of these effects would lead to pessimistic estimations of the read-margin.

Hence today's variation aware design flows of array types of circuits require mainly two input items: 1) a critical path transistor level netlist of the array, including analysis of performance metrics under nominal process conditions and 2) information about the variability of the basic devices, such as for example transistors, photodiodes, interconnects, used in the underlying technology. Usually this information is available separately for local and global process variations, and can be in form of statistical distributions of certain basic device parameters. Often, the netlist described in 1) is a product of an array compiler, and it typically contains only one or at most few of the array cells to save simulation time. Typically, one can find a testbench along with the netlist. It stimulates the critical path netlist by applying appropriate signal combinations to address, write and read data to/from the present cell(s). It also extracts from the circuit response the performance metrics the user is interested in, such as for example the access time (the time between applying a clock signal and a change of the data at the output), the amount of current consumed, or the read-voltage.

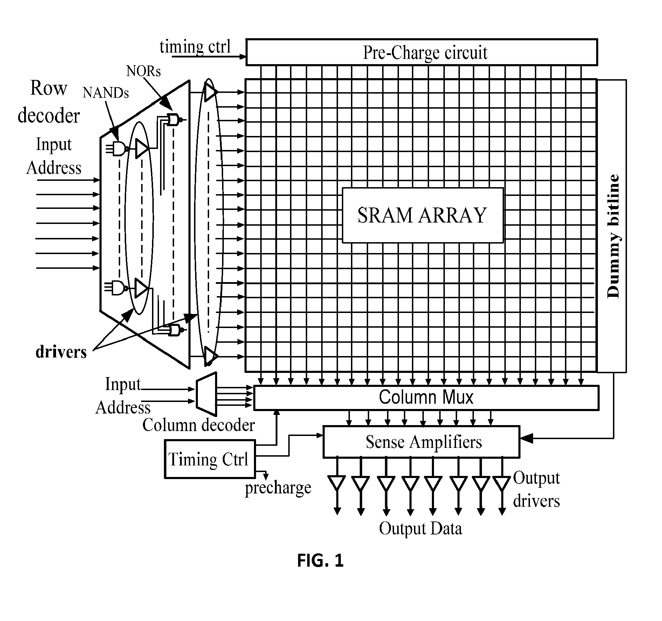

When looking closer to the nature of a critical path netlist model (FIG. 1 - illustrated for the particular case of an SRAM array 10), a difficulty of the apparently straight forward strategy as described above becomes visible; due to the large number of transistors in the array, a simulation of the full circuit model is computationally too difficult. Under the - rational - premise that, in a certain parameter, a memory is performing only as good as does the worst instance of any of its building blocks, it is clear that purging some of these instances for sake of higher simulation speed, destroys the statistics of that parameter. For instance, while it is in general safe to assume that the nominal delay of a memory corresponds to that of its critical path, because none of the pruned building blocks would exhibit different delay, this is not true for the statistical delay of the memory, where all possible instances need to be verified in order to guarantee a worst-case timing behavior of the memory itself.

Correcting statistics of critical path netlist parts has been proposed in the past. Aitken and Idgunji applied in '"Worst-Case Design and Margin for Embedded SRAM", Aitken R. and Idgunji S., Automation & Test in Europe Conference and Exhibition, April 2007, DATE '07', a branch of the extreme value theory originally developed by Gumbel to derive estimates for the variability related yield of SRAMs. The method is fast, as the authors work with analytic expressions of the transformation instead of multiple iterations of statistical sampling and simulation. However, this is in turn also its limitation, since assumption on the Gaussian nature of the metrics must be made. In US 2008/0005707 a product-convolution technique is presented to percolate timing and power distributions from IP-block to SoC-level. This technique was developed for digital blocks and also covers the phenomenon of the shift of statistics when multiple parallel instances are present. However, it requires a separation of different object types through a synchronous boundary, which is generally not provided by a memory critical path netlist.

On the industrial side, designers prefer to work with process corners. An assumed worst case condition drives the attempt to simulate for worst-case memory behavior. Apart from the above-described problem, namely that this can only capture the statistics of the critical path netlist and not the statistics of the full memory, there are more questions. The most important one is: "How are these corners defined?" Many circuit and digital designers are afraid of statistical methods and prefer corners, but at the same time they do not know that the corners themselves are also derived statistically. Secondly, which combination of corners for the different transistor types (nmos, pmos, low-/high-Vth, specialized cell transistor types) actually triggers the worst-possible performance of the memory? This is a non-trivial question in general, especially when considering local random variations which affect every transistor individually, and can often only be answered by combinatorial experiments. Will a good corner in one parameter, such as timing, be also good in another parameter, such as power? In general, the answer is no. In the end, the designer (or her management) is interested in system yield loss due to parametric spread and most likely causes for functional yield loss. Even by answering the above-mentioned questions, the corner approach cannot lead to these figures.

## SUMMARY OF THE INVENTION

It is an object of embodiments of the present invention to provide a good method and a system for performing variability aware analysis of array types of electronic circuits, for example memories.

The above objective is accomplished by a method and a system according to the present invention.

According to a first aspect of the present invention, the present invention provides a method for analyzing performance metrics of array types of electronic systems comprising a large number of building blocks under process variations, like for example semiconductor memories. Performance metrics may include, without being limited thereto, power consumption, voltage and/or current levels, timing parameters, yield. In general, the method according to embodiments of the present invention applies to any type of system where previously in its simulation model some repeated instantiations of subsystems were removed for faster simulation speed. This removing has no influence on nominal case analysis, but it destroys the statistics. By a specific way of simulation the statistics can be re-constructed to an excellent level of accuracy.

A method according to embodiments of the present invention is applicable to array types of electronic circuits, the array type of electronic circuit comprising an array with a plurality of array elements. An access path is a model of the array type of electronic circuit, comprising building blocks containing all hardware to access one array element in the array. Each building block comprises at least one basic element. A method for analyzing a performance metric of an array type of electronic circuit under process variability effects according to an embodiment of the present invention is a two-step method which comprises a first step of deriving statistics of the access path due to variations in the building blocks under process variability of the basic elements, and a second step of deriving statistics of the full array type of electronic circuit by combining the results of the statistics of the access path under awareness of the array architecture.

Hence a method according to embodiments of the present invention comprises indentifying building blocks of the design thereby analyzing variability of design due to variability in the building blocks separately, for example by using specific statistical simulation techniques. The method further comprises re-combining sub-variability information to provide the whole variability under awareness of any architecture based on regular building blocks such as (but not limited to) memory cells, row decoders, bitline sense amplifiers, etc. The method is useful for system designers deploying a specific system and more specific, array, e.g. memory, designers and their management to estimate parametric yield loss due to specifications on these metrics guaranteed to customers. Examples could be but are not limited to maximal cycle time, maximal access time, maximal power consumption (static/dynamic) or maximal tolerated noise. As a second use, the method allows to track down the reasons for functional yield loss, and the relative likelihood of such reasons. This is useful for the array, e.g. memory, designer to avoid the most likely reasons for failures already during design time.

In a method according to embodiments of the present invention, combining the results of the statistics of the access path under awareness of the array architecture may include taking into account a specification of the instance count and the connectivity of the building blocks. This may include taking into account the multiplicity of the building blocks, i.e. the number of instantiations of the building blocks within the electronic circuit.

Deriving statistics of the access path may comprise injecting into the basic elements of a building block variability that can occur under process variations, and simulating the thus modified access path. Variability may be injected into the basic elements of one building block at a time, the other building blocks of the access path remaining invariant with respect to their nominal case. Deriving statistics of the access path due to variations in the building blocks may comprise a statistical sampling technique, such as for example but not limited thereto enhanced Monte Carlo picking.

A method according to embodiments of the present invention may furthermore comprise recording resulting sensitivity populations of the access path.

In a method according to embodiments of the present invention, the step of deriving statistics of the full array type of electronic circuit may comprise any statistical sampling loop, such as for example, but not limited thereto, a Monte Carlo loop.

Deriving statistics of the access path to variations in the building blocks may comprise combining building block sensitivities.

In a method according to embodiments of the present invention, deriving statistics of the full array type of electronic circuit may comprise generating a template of the array type of electronic circuit including all paths through the circuit, for example by listing the full coordinate space, creating a random observation of the electronic circuit following this template, and repeating at least once the step of creating a random observation of the electronic circuit with different random sequences to generate an electronic circuit population. In such embodiments, creating a random observation of the electronic circuit may comprise for each building block of the electronic circuit selecting one random sample from the obtained sensitivity data, combining the thus-obtained samples, and deriving a corresponding path performance metric for every path in the electronic circuit. A method according to embodiments of the present invention may furthermore comprise evaluating a path performance metric for every path in the electronic circuit, and selecting the combination of building blocks corresponding to the worst-case value of this path performance metric.

In a method according to embodiments of the present invention, deriving statistics of the full array type of electronic circuit may furthermore comprise scaling the path performance metrics into an observation of the electronic circuit performance, using any of MAX operator, for example for delays, a MIN operator, for example for read margins, an AVG operator, for example for dynamic energy, a SUM operator, for example for leakage values, an AND operator, for example for yield, or an OR operator, for example for yield-loss.

In a method according to embodiments of the present invention, generating a template of the array type of electronic circuit may comprise including redundant paths in the template. Such methods may furthermore comprise, after evaluating the path performance metric for every path in the electronic circuit, replacing the path corresponding to the worst-case value of this path performance metric by a redundant path if the path performance metric of this redundant path is better than this worst-case path performance metric.

In a second aspect, the present invention provides a computer program product which, when executed on a computer, performs any of the method embodiments of the first aspect of the present invention.

The present invention also provides a machine readable data storage, also called carrier medium, storing the computer program product according to the second aspect of the present invention. The terms "carrier medium" and "machine readable data storage" as used herein refer to any medium that participates in providing instructions to a processor for execution. Such a medium may take many forms, including but not limited to, non-volatile media, volatile media, and transmission media. Non-volatile media include, for example, a floppy disk, a flexible disk, a hard disk, a storage device which is part of mass storage, a magnetic tape, or any other magnetic medium, a CD-ROM, any other optical medium, a punch card, a paper tape, any other physical medium with patterns of holes. Volatile media include dynamic memory such as a RAM, a PROM, an EPROM, a FLASH-EPROM, any other memory chip or cartridge, a carrier wave as described hereafter, or any other medium from which a computer can read.

Various forms of computer readable media may be involved in carrying one or more sequences of one or more instructions to a processor of a computer system for execution. For example, the instructions may initially be carried on a magnetic disk of a remote computer. The remote computer can load the instructions into its dynamic memory and send the instructions over a telephone line using a modem. A modem local to the computer system can receive the data on the telephone line and use an infrared transmitter to convert the data to an infrared signal. An infrared detector coupled to a bus can receive the data carried in the infra-red signal and place the data on the bus. The bus carries data to main memory, from which the processor retrieves and executes the instructions. The instructions received by main memory may optionally be stored on a storage device either before or after execution by the processor. The instructions can also be transmitted via a carrier wave in a network, such as a LAN, a WAN or the internet. Transmission media can take the form of acoustic or light waves, such as those generated during radio wave and infrared data communications. Transmission media include coaxial cables, copper wire and fibre optics, including the wires that form a bus within a computer. The present invention includes making a computer program product available for downloading. Hence the present invention includes transmission of signals representing the computer program product of the second aspect of the present invention over a local or wide area telecommunications network.

In a third aspect, the present invention provides a system for analyzing a performance metric of an array type of electronic circuit under process variability effects. The array type of electronic circuit comprises an array with a plurality of array elements. An access path is defined as a model of the array type of electronic circuit, the model comprising building blocks containing all hardware to access one array element in the array. Each building block comprises at least one basic element. The system comprises first calculation means arranged for deriving statistics of the access path due to variations in the building blocks under process variability of the basic elements, and second calculation means arranged for deriving statistics of the full array type of electronic circuit by combining the results of the statistics of the access path under awareness of the array architecture. In embodiments of the present invention, the first and second calculation means may be embodied in a single processor.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

## BRIEF DESCRIPTION OF THE DRAWINGS

Presently preferred embodiments are described below in conjunction with the appended drawing figures, wherein like reference numerals refer to like elements in the various figures, and wherein:

FIG. 1 shows a full memory circuitry.
FIG. 2 schematically illustrates a method according to embodiments of the present invention.
FIG. 3 shows a sample of a memory as an example of an array-type of circuit, and the architectural topology and its potential impact on statistical correlations.
FIG.4 schematically shows an overview of the first step of an overall method according to embodiments of the present invention, applied to a memory architecture.
FIG. 5 illustrates variability on basic elements, in the particular embodiment illustrated on transistors, due to process variations.
FIG. 6 illustrates in more detail a first step of embodiments of the present invention, where a netlist of a memory architecture is provided together with a transistor variability plot, and where each transistor in a particular building block of the memory architecture is replaced by a model taken from the transistor variability plot (also called injecting or vaccinating), thus generating populations of netlists under variability.
FIG. 7 shows that the simulation of all netlists delivers one observation per netlist, these observations being represented in a graph.
FIG. 8 shows a sample memory.
FIG. 9 shows a coordinate space serving as memory template for the sample memory of FIG. 8.
FIG. 10 illustrates random picking of all elements to build one random full memory array.
FIG. 11 shows an example of how the parameter variation due to process variations in a specific memory block is accessed for one memory path.
FIG. 12 illustrates collapsing, which calculates the performance metric for a path, and which is done for all paths in one memory.
FIG. 13 illustrates application of a scaling rule (MAX in the case illustrated), which selects the worst path-performance of one random memory.
FIG. 14 shows an example, applying different scaling rules.
FIG. 15 illustrates that repetition of random picking of elements to build one full memory array, populating every path (row in a co-ordinate space) with different random sequences of building block instances and applying a scaling rule, populates the memory statistics.
FIG. 16 shows examples of flexibility of the method according to embodiments of the present invention.
FIG. 17 plots probability distributions of MOSFET parameters.
FIG. 18 plots the effect of local random variability of the cycle time of a memory.
FIG. 19 plots the outcome of step 1 of a method according to embodiments of the present invention.
FIG. 20 plots the outcome of step 2 of a method according to embodiments of the present invention.
FIG. 21 shows the output of step 1 of a method according to embodiments of the present invention preserving the correlation relation between any two parameters (cycle time and read margin in the example).
FIG. 22 shows the output of step 2 of a method according to embodiments of the present invention preserving the correlation relation between any two parameters (cycle time and read margin in the example) for local random (called random in the Figure) and global random variations (denoted c2c in the Figure).

FIG. 23 shows the output of step 2 of a method according to embodiments of the present invention preserving the correlation relation between any two parameters (cycle time and read margin in the example) for total variations. It also shows that Digital Corners ("Corners") are inappropriate to estimate the spread.

FIG. 24 shows a sample output of the implementation of the redundancy model according to embodiments of the present invention.

Any reference signs in the claims shall not be construed as limiting the scope.

## DETAILED DESCRIPTION OF ILLUSTRATIVE EMBODIMENTS

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

Furthermore, the terms first, second, third and the like in the description, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description are used for descriptive purposes and not necessarily for describing relative positions. The terms so used are interchangeable under appropriate circumstances and the embodiments of the invention described herein can operate in other orientations than described or illustrated herein.

The term "comprising" should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting of only components A and B. It means that with respect to the present invention, the only relevant components of the device are A and B.

With respect to the disclosure of the present invention, following definitions are used.

An access path netlist is a model of the array type of electronic circuit, for example a memory or an imaging device, that contains all hardware to access one element in the array.

A path through an array comprises electrical hardware that is activated to access an array element. There are several building blocks along this path. Typically, there is only one path in an access path netlist.

A building block, also called island, is a unique set of basic elements, for example transistors, in an access path netlist. A building block differs from other building blocks in the repetition count of the building block hardware in the full array and in the connectivity among other building blocks.

A path coordinate is a set of integer numbers $(c_1, c_2, ..., c_n)$ that address one particular combination of building blocks, and uniquely identifies a path.

A coordinate space is a list of all possible combinations of path coordinates. The cardinality is the same as the number of array elements in the array.

A primary building block has a given multiplicity: for any combination of primary building blocks a path exists.

A dependent building block has a multiplicity which depends on primary building block multiplicities. Not necessarily for any combination of dependent building blocks there is a path. For example a top left array element is not in the bottom row of the array, or in the right hand column.

Redundancy provides at least one extra path in the array. Such extra paths are activated after manufacturing if and only if original paths fail, i.e. are non-functional or do not provide a pre-determined required performance. This activation changes the statistics.

A coordinate space extension is a list of all extra paths defined by redundancy.

A scaling rule is a mathematical operator to be applied over all paths' metric to obtain the array metric. For example: a MAX operator may be used for timing (e.g. a memory is as fast as its slowest bit).

Certain embodiments of the method according to the present invention analyze at least one performance metric of array types of electronic systems comprising a large number (more than could be simulated in a reasonable amount of time) of regular building blocks under process variations, like for example semiconductor memories or imaging devices. A regular building block is defined as a subcircuit of an array type of electronic system, which, when periodically instantiated in a circuit netlist, can resemble the whole system. The method comprises indentifying building blocks of the system, thereby analyzing variability of system due to variability in the building blocks separately by using specific statistical simulation techniques in accordance with embodiments of the present invention and as set out below. As mentioned in the background, variation aware design requires mainly two input items: an access path basic element level netlist of the array type of system, e.g. memory or imaging device, and information about the variability of the basic elements, e.g. transistors, photodiodes, interconnects, resistances, capacitors etc. , used in the underlying technology. A method according to embodiments of the present invention further comprises re-combining sub-variability information, i.e. information about variability of basic elements, e.g. transistors, photodiodes, interconnects, resistors, capacitors etc. to provide the whole variability under awareness of architecture.

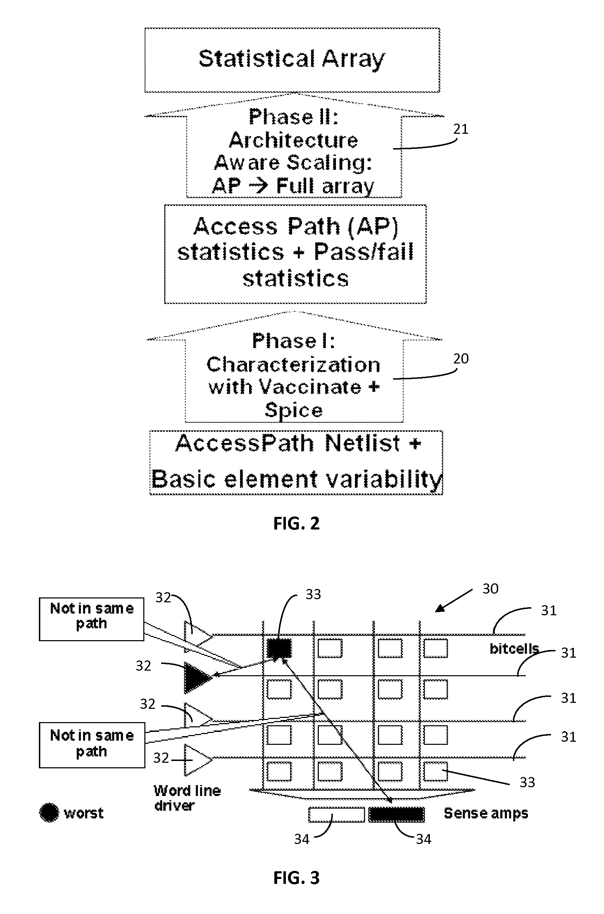

Certain embodiments of the present invention relate to a method of accurately predicting array, e.g. memory, metrics under basic element, e.g. transistor, variability. This method comprises two major steps, as shown schematically in the illustration in FIG. 2:

1) Deriving the statistics of the access path (AP) netlist and certain building blocks thereof - step 20; the access path netlist being a model of the array type of electronic circuit (for example a memory or a visual sensor device) that contains all hardware to access one element in the array; whereby the access path is considered representative for the properties of all paths from input to output of the array under consideration.
2) Deriving the statistics of the full array, e.g. memory, by combining the results of 1), under awareness of the array architecture (organization and possibly redundancy mechanisms) - step 21.

It is to be noted that the method according to embodiments of the present invention may be separated so as to underline that in the first step, the existing netlist with its testbench and the existing simulation tool is re-used in a specific way, while the second step may be implemented as a standalone process.

The goal of this section is to point out the need to derive the statistics not only of the access path netlist of the array type of circuit, e.g. memory, but also of its sensitivity to process variations in certain building blocks thereof (called substatistics), as in step 20 of the method according to embodiments of the present invention. In accordance with embodiments of the present invention, the resulting substatistics are then combined in the second step 21 to the array, e.g. memory, statistics. An access path netlist needs to contain only those elements of an array which are required to accurately simulate the operation of one cell of the array. Parts for simulating other cells are simply missing. This is rectified since the other cells are not activated in the testbench and the designer assumes they do not influence the characteristics of the single activated cell. Parts which passively contribute, such as in case of memories other bitcells on a same bit- or wordline, are often modeled as capacitive loads which are equivalent to the capacitive load of the activated bitcell. Sometimes, two (or four) cells are needed in order to catch the systematic variability along the edges (corners). Such methods to derive local, systematic variations are orthogonal to the method according to embodiments of the present invention, and the variations can be overlaid with the random variations. This can be done by interpolation of the edge (corner) performances depending on array-cell physical position.

It is important to note that different types of array building blocks differ in the number of instantiations in an array. In case the array is a memory, the building blocks in a memory, such as bitcells, sense amplifiers, or word line drivers, differ in the number of instantiations in the memory. The term multiplicity $M_i$ is introduced for the number of instantiations of a building block i in an array. The multiplicity depends on the organization of the array. For example, in a MBC-bit memory with MR rows, the bitcells have a multiplicity of MBC, and the word-lines and the word-line drivers have a multiplicity of MR. In this example, see FIG. 3, MBC=16 and MR=4.

In general a single representative of every building block of the array is needed. As an example, in case of a memory as illustrated in FIG. 3, representatives for only one word line, one bitcell, one bitline pair (it is to be noted that the term bitline may be used later to denote a differential bitline pair), and one sense amplifier with output buffer are needed. Together with the timing circuit (multiplicity one), it is possible to simulate a memory read access to the single bitcell. In other words, and more in general, in an array access path netlist, different amounts of object instantiations of different types have been pruned in order to get a working netlist for one cell. As pointed out earlier, the statistics of the entire array depends on the statistics of its worst object instances. Thus, it is easy to understand that the statistics of the array must depend on the multiplicity $M_i$ of a building block i. As it turns out, building blocks can be further classified depending on their multiplicity into either primary building blocks or dependent building blocks. Primary building blocks have a multiplicity independent of the multiplicity of other building blocks. Dependent building blocks are defined such that their multiplicities are a product of multiplicities of pre-determined primary building blocks. For example in case of a memory, the bitcell building block multiplicity has the highest dependency and depends on all primary building blocks. For instance, in a simple memory array with MT=1 timing circuit, MR rows and MC columns, the bitcell multiplicity is MBC=MT*MR*MC.

Yet knowing the multiplicity of every building block is necessary but not sufficient for determining the statistics of the array. It is also required to know how these building blocks connect. In general array architectures, not any combination of building block instantiation can occur in a path from input to output. For instance for a memory architecture, the first bit of every word always shares the same sense amplifier. It would therefore be too pessimistic to simply combine the worst of all MSA sense amplifier statistics PSA with the worst of all MBC bitcell statistics PBC in order to get the full memory statistics Pmem. In this example, the additional information is required that first bits of the words in any row share the first sense amplifier, and can never be switched to any other sense amplifier. These types of correlations must be considered, cf. FIG. 3. This drawing illustrates a memory 30 with four wordlines 31, each wordline 31 having a wordline driver 32. The memory 30 furthermore comprises 16 bitcells 33, arranged in four columns, and two sense amplifiers 34. It is clear that the bitcell 33 coloured in black, is not in the same path as the wordline driver 32 coloured in black, ant that the bitcell 33 coloured in black is not in the same path as the sense amplifier 34 coloured in black.

In order to formalize this problem, the "cell coordinate" is introduced. A cell coordinate vector, e.g. in case of a memory the bitcell coordinate vector, (b1,...,bj) is an instance of a discrete j-dimensional coordinate space (C1,C2,..Cj), where Ci= {1..Mi}, i=1..j. Each coordinate component corresponds to a primary building block and can assume an integer number between one and the multiplicity of the corresponding primary building block. For example, for the memory array illustrated in FIG.3, the multiplicities of the buiding blocks are as follows: MR = 4 rows, MC = 4 columns, MBC = 16 bitcells. The bitcell coordinate vector looks as follows:

$$
\begin{bmatrix} b1 \\ b2 \\ b3 \\ b4 \\ b5 \\ b6 \\ b7 \\ b8 \\ b9 \\ b10 \\ b11 \\ b12 \\ b13 \\ b14 \\ b15 \\ b16 \end{bmatrix} = \begin{bmatrix} R1 & C1 \\ R1 & C2 \\ R1 & C3 \\ R1 & C4 \\ R2 & C1 \\ R2 & C2 \\ R2 & C3 \\ R2 & C4 \\ R3 & C1 \\ R3 & C2 \\ R3 & C3 \\ R3 & C4 \\ R4 & C1 \\ R4 & C2 \\ R4 & C3 \\ R4 & C4 \end{bmatrix}
$$

Further properties of this concept are:

- The number of dimensions j and the coordinates' domains $(1..M_i)$ define the array organization.
- The number of cells $M_{BC}$ is always the product of the coordinate maximum values $M_i$.
- Two different cells' coordinate vectors differ in at least one coordinate.

As pointed out before, the cell building block is always the most dependent one. However, there can be other dependent building blocks. According to the concept above, a general "dependent building block coordinate" may be introduced with vector components corresponding to those primary coordinates the building block depends on. Finally, also the possibility is introduced to have an empty building block (if there is very little hardware in this building block, and/or the building block's influence to the overall statistics is known or assumed to be very little). It still has a multiplicity (so as to describe the topology connecting dependent building blocks) but no hardware attached to it.

For example, consider the column multiplexers and the sense amplifiers of a memory that has Mbpw bits per word and Mwpr words per row. Then, Mbpw bundles of Mwpr columns (differential bitline pairs) are multiplexed to Mbpw sense amplifiers. Thus, a column multiplexer slice that appears on every bitline pair, is a building block whose multiplicity depends on the sense amplifier building block multiplicity and an empty (would be actually one of Mwpr slices of the logic in the building block that generates the column multiplexer signals) building block's multiplicity, MC=Mbpw*Mwpr. At this point it is assumed that the user supplies a description of the memory architecture with the following information:

<primary island_name 1>      <basic elements>      <multiplicity>
<primary island_name 2>      <basic elements>      <multiplicity>
...
<primary island_name j>      <basic elements>      <multiplicity>
<dependent island_name 1>      <basic elements>      <list of primary island names>
<dependent island_name 2>      <basic elements>      <list of primary island names>
...
<dependent island_name k>      <basic elements>      <list of primary island names>

This table lists all building blocks (island_name i), the list of basic elements, e.g. transistors, photodiodes, interconnects, resistors, capacitors, in the netlist model that pertain to this building block, and the building block multiplicity. In case of dependent building blocks, the multiplicity is implicitly defined by the multiplicities of the primary building blocks. In certain circumstances, the list of basic elements can be empty. In an implementation of the method according to embodiments of the present invention, supplying a regular expression for the <basic elements> field is used to conveniently match all basic elements that belong to the respective building block by instance names or by instantiating subcircuit names.

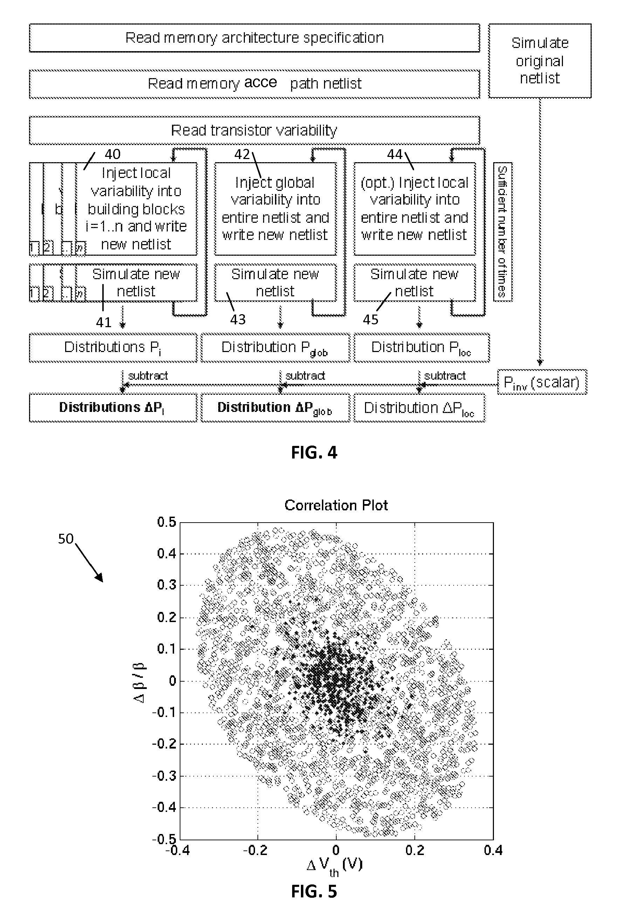

From the previous section it is concluded that it is necessary to derive the statistical spread of a performance metric $P_i$ of the array, e.g. memory, due to variations in each building block i. FIG. 4 shows a schematic overview of a first step of a method according to embodiments of the present invention. The distributions of the performance metric $P_i$ are achieved by generating - step 40 - and simulating - step 41 - access path netlist variants from a given access path netlist. These variants differ in that those basic elements, e.g. transistors, photodiodes, interconnects, resistors, capacitors, pertaining to a pre-determined building block are replaced by basic element variants that can occur under process variations. A correlation plot of possible variants of basic elements, in particular for the example of transistors, is illustrated in FIG. 5. Such replacement is sometimes called injection. In accordance with embodiments of the present invention, basic elements outside the pre-determined building block are kept invariant, i.e. with nominal specifications. There are several ways of doing the injection, such as for example by using a statistical transistor-level simulator or a statistical extension to a transistor-level simulator, by inserting additional active or passive circuit elements that model the process variation or by changing the entire basic element, e.g. transistor, model for every basic element, e.g. transistor. The actual way how to do it is an orthogonal problem, i.e. it does not matter much on the overall process, as long as it supports the concerted replacement as described above, i.e. injection constricted to particular building blocks only. Possible ways of injection are described in "Device mismatch and tradeoffs in the design of analog circuits", Peter R. Kinget, IEEE Journal of Solid-State Circuits, vol.40, No. 6, June 2005; and in "Monte Carlo Simulation of Device Variations and Mismatch in Analog Integrated circuits", Hector Hung et al., Proceedings of the National Conference on Undergraduate Research (NCUR) 2006, April 6-8, 2006.

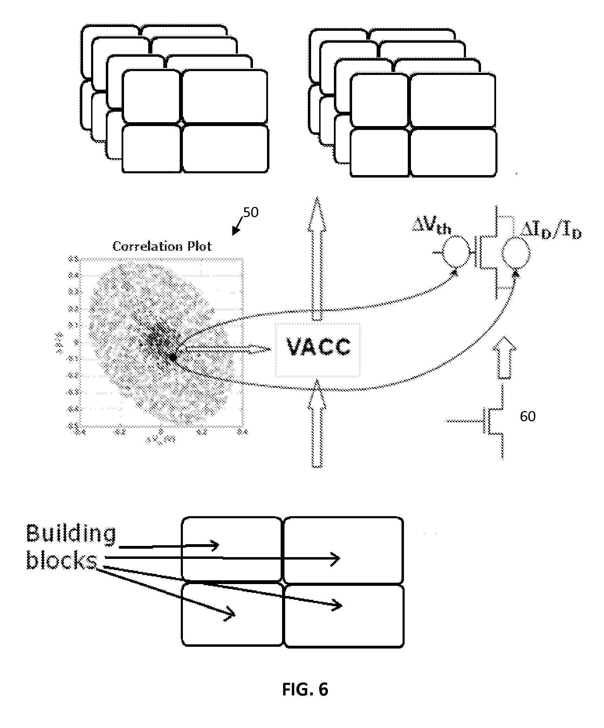

The injection step is illustrated for one embodiment in FIG. 6: each nominal basic element, for example a transistor 60, in a pre-determined building block (e.g. the bottom left building block in the example illustrated) is replaced by an instantiation as randomly selected from the set of possible variants 50 as illustrated in FIG. 5. This way, the basic elements are given a different behavior, depending on the statistical distribution of the basic elements.

By repeating this injection and simulation step sufficient number of times Ni for every building block i, the statistical spread of an array parameter Pi due to process variations in block i is obtained. Increasing this number of iterations Ni helps to increase the confidence on the array parameter Pi, and can be optimized as compared to Monte Carlo by using statistical enhancement techniques. Different access path populations are obtained, each reflecting the consequences of variability of basic elements in one building block.

At this point it is important to note one fundamental difference between local and global process variations, which requires a separate treatment of the two. The former are defined as purely random after cancelling out all known systematic effects. They also comprise unpredicted or unpredictable but known effects and they depend a.o. on transistor area. The latter variations are caused by drift of equipment and environment and are sometimes sub-classified into chip-to-chip, wafer-to-wafer and batch-to-batch variations. As a result, under local random variations the basic element parameters fluctuate randomly when compared to any other basic element in the circuit. Under global variations all basic elements of a same type on a chip are subject to the same shift in parameters. Thus, the described procedure to partition the netlist into building blocks, inject and simulate, applies only to local variations. Since any path under global variations shows the same effect, it is sufficient yet necessary to simulate the entire netlist under global variations to get Pglob. This may be done by injecting global variability into the netlist (hence by replacing all basic elements of one type by a same model selected from the possible variants as in the plot 50) and this way writing a new netlist - step 42 - and simulating the new netlist - step 43. Local and global variations may be combined into the total variations as part of the second step of the method according to embodiments of the present invention.

Together with the nominal (invariable) circuit output Pinv, i.e. the parameter under nominal process conditions, the sensitivities of the access path netlist can be derived, due to local variations in building block i, $\Delta Pi := Pi - Pinv$ and due to global variations $\Delta Pglob := Pglob - Pinv$ where this subtraction is to be understood such that the distributions Pi and Pglob are shifted by the scalar invariable value Pinv to get the distribution of the difference to nominal conditions.

Optionally, it is also proposed to inject and simulate Nloc<=min(Ni) variants of the entire netlist under local variations without partitioning it into building blocks, yielding another access path population $\Delta Ploc := Ploc - Pinv$ - steps 44 and 45. This may mainly be done for calibrating the collapsing step: during collapsing the path's performances are built under the assumption that they are additively separable along building blocks. With this data the assumption can be verified, and even the linear collapsing can be corrected. It just has to be made sure that the same basic element variants are used as the ones used in the separate experiments. A second purpose is comparison between access path and memory statistics.

It is to be noted that the notation of P (or $\Delta P$) actually describes a meta-parameter, which allows to assume that P is multi-valued in general. Its components contain all circuit responses under consideration (for example cycle time, power, etc) and the results of the experiments described above are recorded in tables to store the distributions of the components of $\Delta Pi$ and $\Delta Pglob$ and $\Delta Ploc$ (or of Pi and Pglob and Ploc since it does not matter whether Pinv is subtracted now or later) such that there are Ni and Nglob and Nloc entries (rows) respectively for the number of statistical sampling runs, e.g. Monte Carlo runs, and the different components of $\Delta Pi$ and $\Delta APiglob$ and $\Delta Piloc$ in the columns. This way, the correlation between the performance metrics is preserved through the flow. Usually for the this first step, a statistical enhancement is needed. Especially the bitcell building block can have a huge multiplicity which cannot be captured with classical statistical sampling methods, e.g. classical Monte Carlo. EMC (yield 3) has been used, but it could be any other type of variance reduction technique (such as for example, but not limited thereto, Importance Sampling, Latin Hypercube, Stratified Sampling, Quasi-Monte-Carlo or fitting a density function to the output to extrapolate the density function).

As a final note, failing parameter measurements occurring under process variations may be considered as well. This happens in the testbench if measurement conditions are not fulfilled. For example, suppose a measurement is the time between two signals to change their value. The measurement will fail if an extreme threshold voltage variation on an active transistor causes a signal never to transition, because then the condition is never fulfilled. In this case, P does not assume a value but a special flag to indicate the failure. For every continuous parameter P an additional, binary parameter PGO may be introduced that is set to a first value, e.g. one, if the measurement of P succeeded, and to a second value, e.g. zero, if it failed.

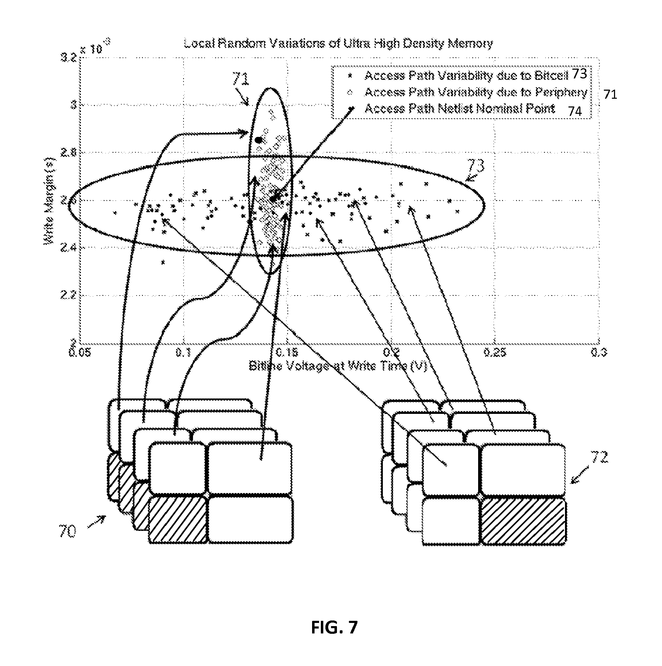

The simulation of all netlists delivers one observation per netlist, as illustrated in FIG. 7, where the results of the modified access path netlists are shown in a graph. These intermediate outputs show a sensitivity analysis of how sensitive metrics react to variation in building blocks; in the example given to variation in the periphery building block and the bitcell building block of a memory array, respectively. The bottom left part 70 of FIG. 7 illustrates an access path netlist population due to variability injected into the periphery building block. The corresponding variability is illustrated in the graph by the region 71. The bottom right part 72 illustrates an access path netlist population due to variability injected into the bitcell building block. The corresponding variability is illustrated in the graph by the region 73. The access path netlist nominal point is indicated by point 74 in the graph.

The second step of a method according to embodiments of the present invention is scaling the access path results to the full array. This happens under awareness of the array architecture. This transformation is referred to as Architecture Aware Scaling (AAS). From the previous step the following were obtained:

- The description of the array architecture.
- The statistical sampling tables, e.g. Monte Carlo tables, of the circuit metrics of interest, see FIG. 7.

The idea behind AAS is to imitate the process of building arrays by following the natural laws of randomness. This means for local variations, that any array contains random variants for all instances of all building blocks. For global variations, all building blocks drift into the same direction, since all basic elements drift into the same direction.

A general array template is built by listing the entire primary coordinate space. This is a list of all parts needed for building the array, which forms the layout of the array. This layout is invariant throughout the method according to embodiments of the present invention. Building the array template means all possible combinations of primary building blocks are formally written down. In the next step also all dependent block combinations are listed, adjacent to the primary columns. Some building blocks, the building blocks with lower multiplicity, of the template maybe shared amongst paths (e.g. periphery in a memory may be shared among all paths, a column decoder may be shared by a plurality of paths), other building blocks may be unique to a path (e.g. each bitcell in a memory is unique to a path). In the end a matrix of integer numbers with MBC rows and j+k columns has been defined. The cells contain a enumeration of the different instances of building blocks that are required to define an array. This structure is an abstracted view on the array organization.

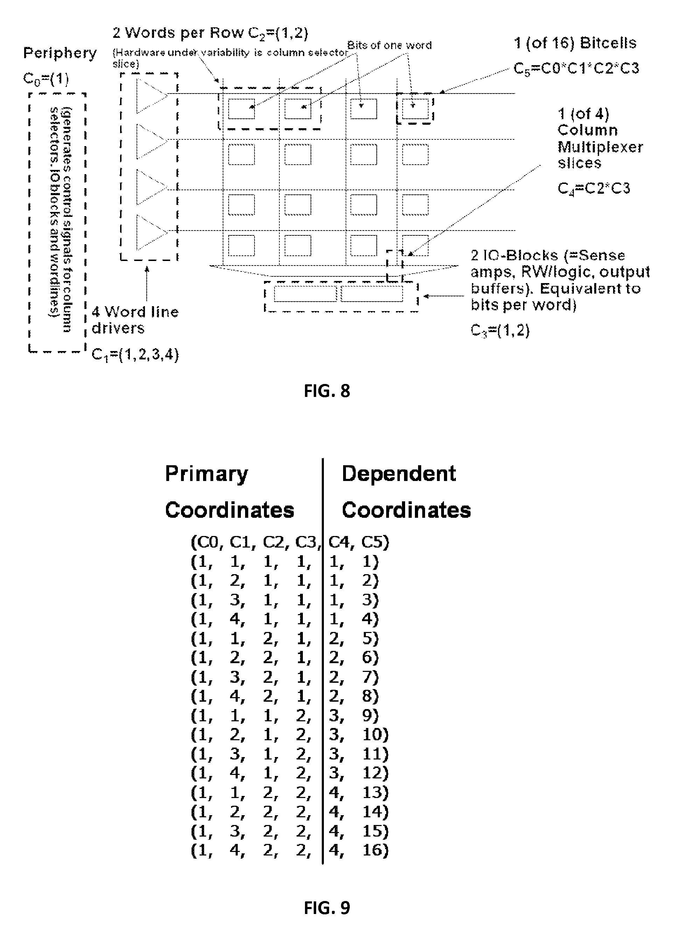

As an example, the simple memory as illustrated in FIG. 8 is considered. There are four primary coordinates: C0 = periphery, M0=1; C1 = word lines, M1=4; C2 = words, M2=2; C3 = bit position in word, M3=2. There are two dependent coordinates: C4 = Column multiplexer slice, which depends on the word being addressed and the bit position within a word, so M4=M2*M3; and the C5 = bitcell, M5=M0*M1*M2*M3 = 16. The coordinate space for this example is illustrated in FIG. 9.

Since there are j=4 primary coordinates and k=2 dependent coordinates, and since there are 16 bitcells, a memory template as in FIG. 9 is created, consisting of (four + two) columns and 16 rows.

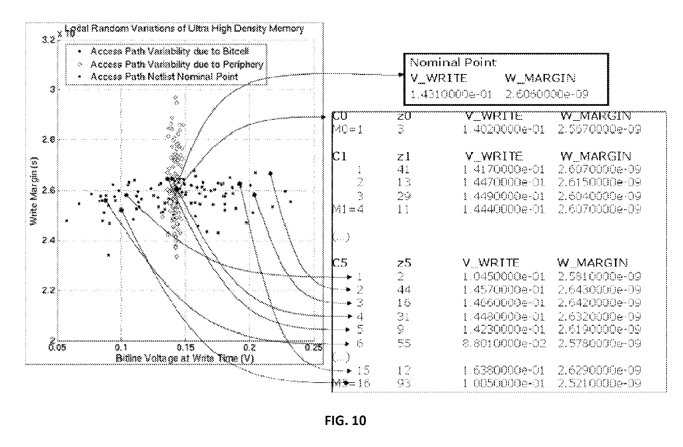

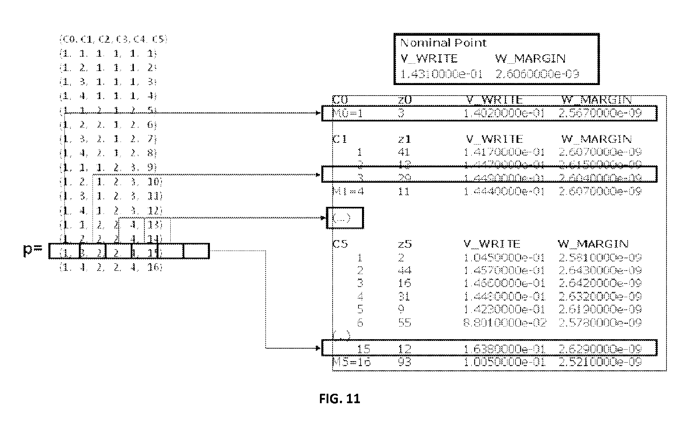

In order to build a sample of this template, random instances are now selected for all building blocks that appear. These instances for the building blocks are picked from the statistical sampling tables, e.g. (enhanced) Monte Carlo tables, as received from the previous step, as depicted in FIG. 10 for two building blocks (access path variability due to bitcell and access path variability due to periphery). This is done by picking as many row-indices in a certain table as there are instantiations of the corresponding building block. The actual statistical method for this can be Monte Carlo in the simplest case, i.e. a random number generator with equal chance of picking the Ni entries (however respecting they may have different weights, i.e. probabilities to occur as a result of the enhanced Monte Carlo in the previous step), or a statistically enhanced version. FIG. 10 shows an example. Let's assume p to be an instance of the listed coordinate space. Further, let $z_i$, i=1..j+k, denote j+k vectors, where the cardinality of $z_i$ is the multiplicity $M_i$ of the building block coordinate i. These vectors contain the picked indices for coordinate i. Looking up in the statistical sampling tables, e.g. Monte Carlo tables, at the derived indices $z_i$ yields a possible value for influence on a certain path metric $P = \Delta P + P_{inv}$ due to local variations in the corresponding block i. The picking of the building blocks is illustrated in FIG. 11. The above-described index-vector $z_i$ is to be noted, pointing into the corresponding statistical sampling population table, e.g. (Enhanced) Monte Carlo population table, number i as generated by injection for the building blocks i during phase 1 of a method according to embodiments of the present invention.

Now for a particular array instance, in the example illustrated a memory instance, a set of metric values P are picked for every building block. The concept is pictured in FIG. 11 with a highlighted path p and pointers into the corresponding tables that contain enumeration, z vectors, and looked-up value for $P_i(z_i(p(i)))$. (In this case, V_WRITE and W_MARGIN, meaning the bitline voltage at write time; and respectively the time between the cell has flipped and the wordline closing time) This means, the path coordinate at position i point to one of $M_i$ random table indices $z_i$, where the one observation of P is looked up. $\Delta P_i(z_i(p(i))$ is built from $P_i(z_i(p(i)))$ by subtracting the nominal value $P_{inv}$. By combining these $\Delta P_i(z_i(p(i)))$ for all i=1..j+k, the total effect for a particular path p along the building block instances can be generated. This combining is referred to as collapsing. The values may be combined in a particular way to the path performance. By experiment, a straight forward addition of the sensitivities of the parameter of the building blocks due to local variability (hence the assumption that these sensitivities are additively separable),

$$ P_{(p)} = P_{inv} + \Sigma_{i=1..j+k}\, \Delta P_i\big(z_i\big(p(i)\big)\big) $$

yields an excellent approximation for the combined effect, as simulations of the entire access path netlist with the same basic element variants used in the building blocks show. For the sake of simplicity the $\Sigma\Delta$ method (method of additively separating sensitivities) is used for the time being.

In the example of FIG. 11, the following operation will be performed for the highlighted instance of a path p= (1,3,2,2,4,15), where P = V_WRITE:

$$ P_{(p)} = P_{inv} + \Delta P_{C0\#1} + \Delta P_{C1\#3} + \Delta P_{C2\#2} + \Delta P_{C3\#2} + \Delta P_{C4\#4} + \Delta P_{C5\#15} $$

So, along this very path (1223), the parameter assumes a value of:

$$ P_{(p)} = (143.1 + 140.2 + 143.1 + 144.4 + 143.1 + 142.6 + 163.8 - 6*143.1)\ \text{mV} = \mathbf{161.7\ mV} $$

Corresponding steps are taken for W_MARGIN or any further meanings of P. This provides the performance parameter of one path.

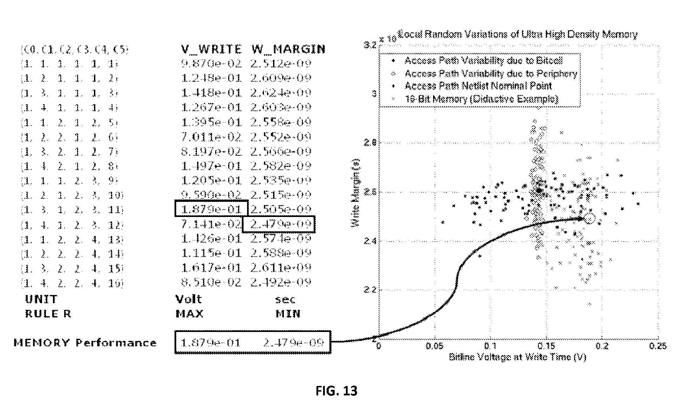

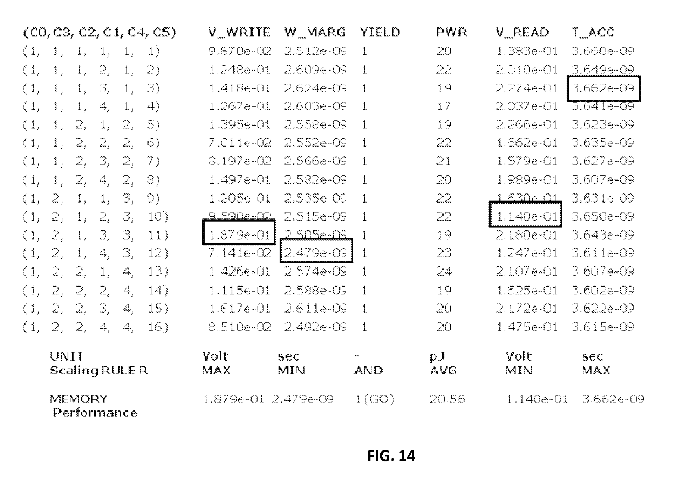

Performance parameters P of all paths of an array are illustrated in FIG. 13 and 14, for the example illustrated with respect to FIG. 6 to FIG. 11.

There is one exception to this method of additively separating sensitivities for binary parameters, where the method of summing does not make sense. In this case a binary parameter of the path instance is defined as the AND-combination (or product) of the corresponding building block binary parameters PGO,i. This requires the functional metric to be fulfilled by all building block instances in order to have the requirement fulfilled by the current path.

An array, for example a memory, is always only as good as its worst feasible combination of building block instances, i.e. the worst path. Therefore, after collapsing the performance metrics for all $M_{BC}$ possible coordinate combinations (paths), a search is performed for the worst such combination in order to find a worst-case value of this performance metric for this particular array instance. Worst-case is thereby defined depending on the nature of the parameter.

$$ P_{array} = R_{\,p\,\text{in}\,\{\,\text{all paths}\,\}}\big(P_{(p)}\big) $$

Reference is made to the rule R which translates the path values of a parameter P(p) into its array value Parray as scaling rule. In general, the following scaling rules can occur:

- MAX: The maximum of all values is the most commonly used, such as for example when seeking the slowest possible access time among all paths. Other uses include, but are not limited to: setup time, hold time, write voltage.
- MIN: It can be important to know the minimum of certain values, for example the amount of voltage that is built up on the differential bitline pair at read time. Even the minimum of the access time can be critical, for example when considering hold time requirements of memory downstream circuitry. Other uses include, but are not limited to: write margin, the amount of time between the cell has flipped after a write operation and wordline closing time (also sense amp closing time and precharge starting time).
- AVG: Average. This may be used for example for leakage power and dynamic energy consumption if these are modeled in the netlist model such that they predict the corresponding array values by incorporating the right multiplicities.
- SUM: Building the sum can be useful if the access path netlist does not implicitly contain the scaling rule for power, as opposed to the AVG operator.
- Binary operators: For example an AND operator can be used to require some metric to be fulfilled by all paths in order to have the requirement fulfilled by the array. As another example, an OR operator could be used to scale failing blocks, indicated by 1 for fail or 0 for no-fail.

By applying the appropriate rule R for every parameter component P, which the user supplies, for example in a table, the performance metrics is built for a particular array instance $P_{array}$. This way, one random array observation has been found, and this one may be put in an overall graph - see FIG. 13. In this case, the scaling rule applied is MAX, and this scaling rule selects the worst performance of one random memory.

An example wherein different scaling rules are used, is shown in FIG. 14.

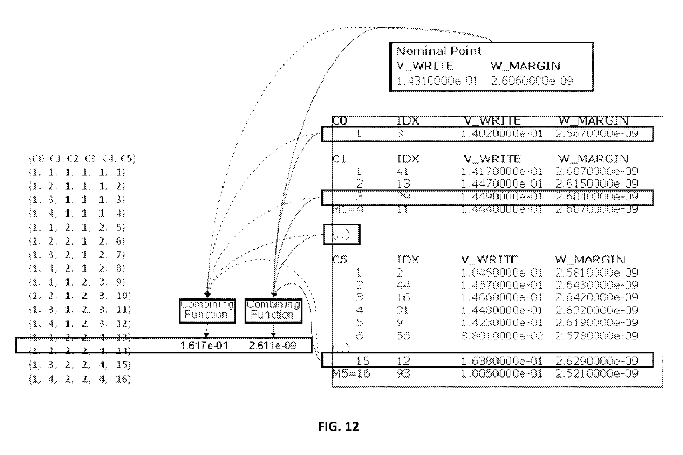

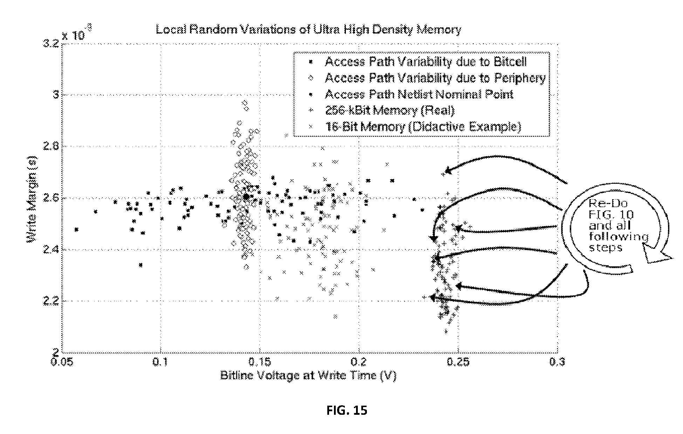

By iterating the array imitation as described with respect to FIG. 10 to FIG. 13 over several times, and with different random indices into the building block tables, variants for $P_{array}$ are generated, as illustrated in FIG. 15. This has been the overall objective of the problem. It is to be noted that the components of $P_{array}$ are still correlated. This means that the user can have multiple constraints on multiple parameters P and compute the compound parametric yield, as opposed to only partial yields if the correlation would not be preserved.

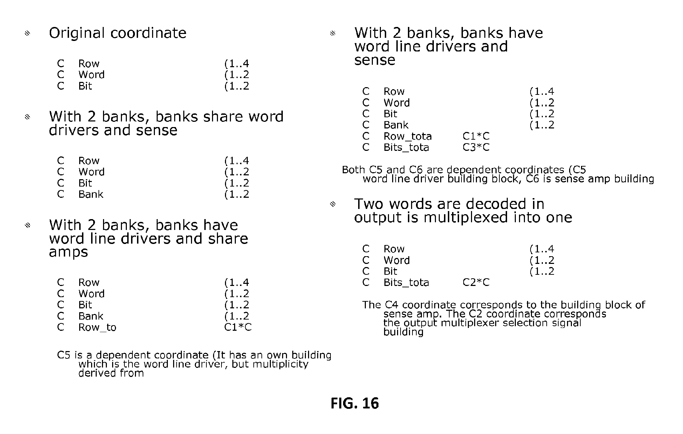

The example above can be considered as the simplest description of a memory as a particular type of array. FIG. 16 shows more examples of memories, with more hierarchy in the memory, thus more primary building blocks and also more dependent ones.

Including redundancy (e.g., spare rows and/or columns) and/or Error Correction Codes in an array architecture is classically used as today's main alternative to yield enhancement and cost reduction. The method according to embodiments of the present invention is capable of including various types of redundancy approaches used in array design, for example memory design, and of correctly characterizing their impact on the resulting array performance metrics. Array redundancy, for example memory redundancy, may be implemented by a set of redundant cells, e.g. bitcells, forming redundant cell row(s) or cell column(s) possibly with other redundant array parts (e.g. redundant word line drivers, redundant sense amplifiers, ...). In such array architectures two types of data paths can be distinguished - the original data paths created by the original (non-redundant) array parts and data paths created completely or partially by redundant parts (by redundant cells together with other redundant array parts such as for example redundant line drivers, redundant sense amplifiers and so on). According to embodiments of the present invention, the redundant data paths may be characterized under process variability in the same way like the original ones.

A method according to embodiments of the present invention handles array redundancy in two steps:

1. Describing redundant data paths by means of AAS transformation. Redundant data paths of an array form a so called *redundant coordinate space,* next to the main array coordinate space.
2. Replacing nonfunctional array data paths with redundant ones (possibly functional). In terms of AAS transformation this step represents merging the original coordinate space with the redundant coordinate space and it has to take part just before combining (scaling) access path statistics towards array statistics.

The redundancy coordinate space is derived from the main array coordinate space by extending one or more original coordinates. The original coordinates under extension are called *the key redundancy coordinates.* Based on the nature of the key redundancy coordinates (primary or dependent) the redundancy coordinate space can be classified as complete or incomplete. AAS descriptions - redundancy coordinate spaces - will be derived hereinbelow for commonly seen redundancy implementations and also the process of merging redundancy and main coordinate space will be described.

The redundancy approach is analyzed, as an example only, based on row redundancy per memory bank that could be described by the complete redundancy space. The invention, however, is not limited thereto. Other types of

## EP 2 234 026 A1

redundancy can be dealt with. Furthermore, the redundancy approach in accordance with embodiments of the present invention does not only hold for memories but also for other array types of circuits.

In case of row redundancy per memory bank, the coordinate under extension is the primary coordinate expressing the number of rows (word lines, word line drivers, slice of row address decoder) per memory bank and the extension range is defined by the number of redundant rows available.

Supposing the simplified example of a memory with 4 rows, 2 words per row and 2 bits per word as illustrated in FIG. 8, the coordinate space $(C_1, C_2, C_3)$ is formed by the following three primary bitcell coordinates

$C_1$ - number of rows with the range (1...4)
$C_2$ - number of words per row with the range (1...2)
$C_3$ - number of bits per word with the range (1... 2)

Supposing that the memory contains also one redundant bitcell row (next to the existing ones), then the corresponding redundant coordinate space $(C_{r1}, C_2, C_3)$ will be formed by the bitcell coordinates where only $C_{r1}$ differs from the original coordinate set

$C_{r1}$ - number of rows with the range (5)

$C_1$ is called the key redundancy coordinate and $C_{r1}$ represents its extension. The redundant coordinate space $(C_{r1}, C_2, C_3)$ is called complete because it contains all coordinates (or their extensions) from the original coordinate space $(C_1, C_2, C_3)$. Table 1 shows the enumeration of the original and redundancy coordinate space. The columns denoted Per. and BC represent coordinates that are in any memory architecture by default:

Per. - the primary coordinate related to the memory periphery
BC-the dependent coordinate related to the memory bitcell building block.

**Main coordinate space**

| Per. | C3 | C2 | C1 | BC |
|---|---|---|---|---|
| 1 | 1 | 1 | 1 | 1 |
| 1 | 1 | 1 | 2 | 2 |
| 1 | 1 | 1 | 3 | 3 |
| 1 | 1 | 1 | 4 | 4 |
| 1 | 1 | 2 | 1 | 5 |
| 1 | 1 | 2 | 2 | 6 |
| 1 | 1 | 2 | 3 | 7 |
| 1 | 1 | 2 | 4 | 8 |
| 1 | 2 | 1 | 1 | 9 |
| 1 | 2 | 1 | 2 | 10 |
| 1 | 2 | 1 | 3 | 11 |
| 1 | 2 | 1 | 4 | 12 |
| 1 | 2 | 2 | 1 | 13 |
| 1 | 2 | 2 | 2 | 14 |
| 1 | 2 | 2 | 3 | 15 |
| 1 | 2 | 2 | 4 | 16 |

**Redundancy coordinate subspace**

| Per. | C3 | C2 | C1 | BC |
|---|---|---|---|---|
| 1 | 1 | 1 | 5 | 17 |
| 1 | 1 | 2 | 5 | 18 |
| 1 | 2 | 1 | 5 | 19 |
| 1 | 2 | 2 | 5 | 20 |

**Table 1**

Other examples of main and complete redundancy coordinate spaces for commonly used redundancy approaches are listed in Table 2.

**Table 2**

| $n$ redudant rows | | | | |
|---|---|---|---|---|
| | Main coordinate space | | Redundancy coordinate space | |
| Rows | $C_1$ | $(1..M_1)$ | $C_{r1}$ | $(M_1+1..M_1+n)$ |
| Words | $C_2$ | $(1..M_2)$ | $C_2$ | $(1..M_2)$ |
| Bits | $C_3$ | $(1..M_3)$ | $C_3$ | $(1..M_3)$ |
| | | | | |
| Io and row redundancy combined ($n$ redudant row and $m$ redundant bits) | | | | |
| | Main coordinate space | | Redundancy coordinate space | |
| Rows | $C_1$ | $(1..M_1)$ | $C_{r1}$ | $(M_1+1..M_1+n)$ |
| Words | $C_2$ | $(1..M_2)$ | $C_2$ | $(1..M_2)$ |
| Bits | $C_3$ | $(1..M_3)$ | $C_{r3}$ | $(M_3+1..M_3+m)$ |
| | | | | |

(continued)

| n redundant rows per bank | | | | |
|---|---|---|---|---|
| | Main coordinate space | | Redundancy coordinate space | |
| Rows | $C_1$ | $(1..M_1)$ | $C_{r1}$ | $(M_1+1..M_1+n)$ |
| Words | $C_2$ | $(1..M_2)$ | $C_2$ | $(1..M_2)$ |
| Bits | $C_3$ | $(1..M_3)$ | $C_3$ | $(1..M_3)$ |
| Banks | $C_4$ | $(1..M_4)$ | $C_4$ | $(1..M_4)$ |

Each line in the main and in the redundant coordinate space represents a unique data path of a memory.

The first step of the method including redundancy - deriving the statistics of the access path - is as set out above for the method without redundancy.

During the 2nd step of a method according to embodiments of the present invention - scaling the access path statistics towards array statistics - each data path of each generated array instance has to be evaluated with respect to all observed array performance metrics. The performance metrics are real valued or binary parameters. Based on user-supplied limits applied on these parameters (PMIN < P < PMAX) or based on resulting values of binary parameters PGO a decision can be taken on whether a particular data path is functional or not. If there are nonfunctional data paths in the array originated from the main coordinate space and the array contains any type of redundancy expressed by the redundant coordinate space, a trial can be made to replace nonfunctional data paths by possibly functional redundant data paths. This corresponds to a merging of main and redundant coordinate space with respect to key redundancy coordinates.

As an example only, the performance metric may be represented by a timing parameter P which has the max limit value $P_{max}$. After the evaluation of an array instance any data path with the value of parameter P higher that the limit $P_{max}$ is classified as a nonfunctional data path. It has to be noted that the subject of a redundancy replacement is not only the nonfunctional data path itself but also all others data paths with the same value of key redundancy coordinate. For ease of explanation, the data paths related by a certain value of key redundancy coordinate are called *adjacent* data paths. If at the same time the redundant coordinate space contains the block of adjacent functional data paths (a block identified by a certain value of extended key redundancy coordinate) it can be used to replace the block containing one or more nonfunctional data path(s) in the main coordinate space. It corresponds to the reality when the redundancy replacement covers not only a particular defective cell but the whole row, column and so on, depending on the type of redundancy approach implemented.

This process is now described on the simple memory example described hereinabove, for which both, main and redundant, coordinate spaces have already been derived (Table 1). Table 3 illustrates the possible situation.

| Per. | C3 | C2 | C1 | BC | | P [ns] |
|------|----|----|----|-----|--|--------|
| 1 | 1 | 1 | 1 | 1 | | 12.10 |
| 1 | 1 | 1 | 2 | 2 | | 13.20 |
| 1 | 1 | 1 | 3 | 3 | | 5.70 |
| 1 | 1 | 1 | 4 | 4 | | 7.80 |
| 1 | 1 | 2 | 1 | 5 | | 12.30 |
| 1 | 1 | 2 | 2 | 6 | | 7.10 |
| 1 | 1 | 2 | 3 | 7 | | 16.20 |
| 1 | 1 | 2 | 4 | 8 | | 12.30 |
| 1 | 2 | 1 | 1 | 9 | | 12.20 |
| 1 | 2 | 1 | 2 | 10 | | 12.40 |
| 1 | 2 | 1 | 3 | 11 | | 5.40 |
| 1 | 2 | 1 | 4 | 12 | | 13.10 |
| 1 | 2 | 2 | 1 | 13 | | 12.00 |
| 1 | 2 | 2 | 2 | 14 | | 13.00 |
| 1 | 2 | 2 | 3 | 15 | | 5.30 |
| 1 | 2 | 2 | 4 | 16 | | 15.30 |

**Redundancy coordinate subspace**          **Parameters**

| Per. | C3 | C2 | C1 | BC | | P [ns] |
|------|----|----|----|-----|--|--------|
| 1 | 1 | 1 | 5 | 17 | | 11.80 |
| 1 | 1 | 2 | 5 | 18 | | 12.80 |
| 1 | 2 | 1 | 5 | 19 | | 12.00 |
| 1 | 2 | 2 | 5 | 20 | | 14.00 |

**Table 3**

If the performance metric, timing parameter P (e.g. time access of the memory) has the max limit value $P_{max}$ = 16ns, then for the data path displayed at the seventh line and defined by the bitcell coordinates (1, 1, 2, 3, 7) the value of parameter P crossed the limit $P_{max}$ and the data path has to be classified as a nonfunctional. The key redundancy coordinate of this data path $C_1$ has value 3. It means that all adjacent datapaths (with $C_1$ equal to 3) have to be replaced. Fortunately all data paths of spare redundant coordinate space are evaluated as functional and can be used to replace the nonfunctional paths of main redundant space. Because this example covers the case with only one redundant row, the block of redundant data paths that is used for replacement corresponds to the whole redundant coordinate space. It is to be noted also that if there appear more than one nonfunctional data paths with different values of $C_1$, which corresponds to the errors located at different rows, the redundancy approach used in this example can not help. It is also to be noticed that because the redundant coordinate space is complete, which means that all coordinates from the main space are also present in the redundant space, all redundant data paths are fully evaluated with respect to the observed performance metrics and a corrected memory instance doesn't require any additional evaluation before applying the next step of the method - scaling access path statistics towards memory statistics.

A redundancy coordinate space based on extension of dependent coordinates of the main coordinate space is called incomplete redundancy coordinate space. The term incomplete originates from the fact that values of primary coordinates forming dependent key coordinates are not defined in such redundancy space. A typical example of the redundancy approach leading to an incomplete redundancy space is the so called shift column redundancy. In such case the array contains only redundant cells creating one or more columns without any other redundant circuitry, e.g. redundant sense amplifiers, multiplexers and so on. So when a redundancy repair takes place redundancy bitlines have to be reconnected to an existing multiplexer and sense amplifier circuitry the concrete coordinates of these non redundant, reused array parts are not known in advance. Hence the redundancy coordinate space is not defined with respect to these reused array parts and has to be left empty, incomplete.

When turning back to the same simplified example as was used to demonstrate complete redundancy space but now with the shift column redundancy approach implemented, a new dependent coordinate $C_4 \leftarrow C_2 * C_3$ has to be defined expressing the number of columns. The cardinality of the new dependent coordinate $M_4$ is equal to the product of primary coordinates' cardinalities $M_2 M_3$. Thus the main coordinate space ($C_1$, $C_2$, $C_3$, $C_4$) is formed by the following three primary and one dependent bitcell coordinates

$C_1$ - number of rows with the range (1...4)
$C_2$ - number of words per row with the range (1...2)
$C_3$ - number of bits per word with the range (1... 2)
$C_4$ - number of bitline columns with the range (1... 4)

The corresponding redundancy coordinate space ($C_1$, $C_2$, $C_3$, $C_{r4}$) extends the dependent coordinate $C_4$ to the redundant one $C_{r4}$. Moreover the values of primary coordinates $C_2$ and $C_3$, which form $C_4$, remain undefined before the redundancy takes place. Table 4 shows main and redundancy coordinate space for the described situation.

### Main coordinate space

| Per. | C4 | C3 | C2 | C1 | BC |
|------|----|----|----|----|----|
| 1 | 1 | 1 | 1 | 1 | 1 |
| 1 | 1 | 1 | 1 | 2 | 2 |
| 1 | 1 | 1 | 1 | 3 | 3 |
| 1 | 1 | 1 | 1 | 4 | 4 |
| 1 | 2 | 1 | 2 | 1 | 5 |
| 1 | 2 | 1 | 2 | 2 | 6 |
| 1 | 2 | 1 | 2 | 3 | 7 |
| 1 | 2 | 1 | 2 | 4 | 8 |
| 1 | 3 | 2 | 1 | 1 | 9 |
| 1 | 3 | 2 | 1 | 2 | 10 |
| 1 | 3 | 2 | 1 | 3 | 11 |
| 1 | 3 | 2 | 1 | 4 | 12 |
| 1 | 4 | 2 | 2 | 1 | 13 |
| 1 | 4 | 2 | 2 | 2 | 14 |
| 1 | 4 | 2 | 2 | 3 | 15 |
| 1 | 4 | 2 | 2 | 4 | 16 |

### Redundancy (incomplete) coordinate subspace

| Per. | C4 | | | C1 | BC |
|------|----|----|----|----|----|
| 1 | 5 | NA | NA | 1 | 1 |
| 1 | 5 | NA | NA | 2 | 2 |
| 1 | 5 | NA | NA | 3 | 3 |
| 1 | 5 | NA | NA | 4 | 4 |

**Table 4**

Other examples of redundancy techniques resulting to an incomplete redundancy space are listed in Table 5.

**Table 5**

| *n* shift columns | | | | |
|---|---|---|---|---|
| | Memory coordinate space | | Redundancy coordinate subspace | |
| Rows | $C_1$ | $(1..M_1)$ | $C_1$ | $(1..M_1)$ |
| Words | $C_2$ | $(1..M_2)$ | $C_2$ | $(x)$ |
| Bits | $C_3$ | $(1..M_3)$ | $C_3$ | $(x)$ |
| Bank | $C_4 ? C_2 {}_* C_3$ | $(1..M_2 * M_3)$ | $C_{r4}$ | $(M_2 * M_3 + 1..M_2 * M_2 + n)$ |
| | | | | |

(continued)

| n rows per $M_4$ banks | | | | |
|---|---|---|---|---|
| | Memory coordinate space | | Redundancy coordinate subspace | |
| Rows | $C_1$ | $(1..M_1)$ | $C_1$ | $(x)$ |
| Words | $C_2$ | $(1..M_2)$ | $C_2$ | $(1..M_2)$ |
| Bits | $C_3$ | $(1..M_3)$ | $C_3$ | $(1..M_2)$ |
| Bank | $C_4$ | $(1..M_4)$ | $C_4$ | $(x)$ |
| Total rows | $C_5?C_1{}_*C_4$ | $(1..M_1{}^*M_4)$ | $C_{r5}$ | $(M_1{}^*M_4+1..M_1{}^*M_4+n)$ |

After the setup of a main and redundant coordinate space the method according to embodiments of the present invention continues in a similar way already described in the case of complete redundant coordinate space -observed array performance metrics are evaluated for all existing data paths and if redundancy takes place both coordinate spaces are merged accordingly. However, due to non-defined primary coordinates existing in incomplete redundancy space, array performance metrics on redundant data paths cannot be fully evaluated. It means that the variability fluctuations of array building blocks described by those non-defined primary coordinates are not included in evaluated performance metrics of redundant space.

Hence, when redundancy correction takes place, a merging of main and redundant coordinate spaces driven by key redundancy coordinates happens. After replacing of non functional data paths of the main coordinate space by redundant ones, the originally non-defined primary coordinates get their values coming from replaced adjacent data paths. Newly formed data paths are fully defined with respect to their cell coordinates and all performance metrics need to be reevaluated for these data paths for a given array instance.

Variants of the method are presented hereinafter.

### Global variations as primary coordinate with M=1

During step two, a method according to embodiments of the present invention re-combines statistics of the individual building blocks under local process variations. The result is the array statistics under local process variations. If the user is interested in total (local and global) process variation effects, step 2 can be used in a specific way. Assuming there exists information on $\Delta P_{glob}$ defined earlier, then global variations affect all basic elements of a particular type (e.g. transistors, photodiodes, etc.) on a die in the same manner (to be more precise, every basic element type will receive the same parameter shift). Another primary coordinate can therefore be introduced that captures the global variations, before starting step 2. Setting its multiplicity to one ensures that the number of cells does not change, and that on the same array, every basic element of a same type receives the same variation.

### Combining techniques

The way of combining the effects of basic element parameter fluctuations on the performance metrics in the individual blocks $\Delta P_i$ has been described until now to be a simple linear addition. This is correct if the effects in the individual blocks are completely independent. In addition, only if global and local variations are orthogonal, linear addition of the effects of $\Delta P_{glob}$ is exact. Both requirements are close to reality and the accuracy of linearly combining is accurate within few percent error. This subsection points out that this error can be reduced by selecting different methods of combining $\Delta P_i$, $\Delta P_{glob}$, and $P_{inv}$ in order to get a more accurate estimate of $P_{path}$. In general a combining function f is looked for such that

$$P_{path,loc} = f\left(\Delta P_i, P_{inv}, c_{loc}\right)$$

$$P_{path,world} = f\left(\Delta P_i, \Delta P_{glob}, P_{inv}, c_{world}\right)$$

with a vector of coefficients $c_{loc}$ or $c_{world}$ depending on whether a more accurate function for local or for total (world) variations is looked for. It is to be noted that the path indices on the right side of the equations have been dropped for simplification. In order to determine $c$ the data of $P_{loc}$ is included, which had been previously defined as a characterization of variants of entire access path netlist under the same process variations as used in the individual blocks for blocks at the same time, or $P_{world}$ which contains similar simulation data but under local and global variations, respectively. For example, by going from simple addition of the deltas to linear regression, i.e. adding a scalar constant k to the sum, the typical error was reduced by 50% yielding relative errors of less than one percent for the most commonly used performance parameters. Formally,

$$P_{path,loc} = P_{inv} + \Sigma \Delta P_i + k_{loc}$$

$$P_{path,world} = P_{inv} + \Sigma \Delta P_i + \Delta P_{glob} + k_{world}$$

The constants k have to be derived such that they minimize an adequate error metric that compares the samples of the simulated reference distribution $P_{loc}$ (or $P_{world}$) with the samples created by the above lines using the same basic element parameter fluctuations. In the example, k was calibrated by minimizing the root mean square error of the individual samples (RMSE). Other error metrics can be used as well.

More complex combining techniques may be used too (e.g. nonlinear influences of $\Delta P$ and/or interactions between different $\Delta$P). It is also possible to include the basic element parameter fluctuations themselves into the calibration. This enters the field of response surface modeling. If the user wishes to include several global variation types, like chip-to-chip or wafer-to-wafer, etc., it is equally possible to include several corresponding terms into *f*.

**Considering other variation types**

Up to now basic element parameter fluctuations have been described. In accordance with embodiments of the present invention, a noise source may be injected, for example on top of the bitline voltage for advanced analysis of read failures caused by too small read margins. In modern processes not only the devices but also the interconnect is subject to manufacturing variations. According to embodiments of the present invention the basic element parameter fluctuations may include also resistance and capacitance variations of interconnect in the same way using the method according to embodiments of the present invention as soon as the problem emerges.

In addition, interconnect delay may cause an important systematic and predictable variation. The physical distance between the outermost word and bitlines across an array, for example a memory, can be so large that additional RC delay t emerges between them. As a result, the distributions of cells far apart shift with respect to each other by t. Up to now the cells were assumed to have no offset with respect to each other. In fact, industrial netlists actually do sometimes contain not only one but two or more cells in order to evaluate P in two or more physical edges or corners of the array. In accordance with embodiments of the present invention, this information may be used when combining the parameter distributions by linear interpolation. For instance, suppose a parameter P is taken for the leftmost column and for the rightmost column and the multiplicity of the column is M. Then when combining the parameter for the column block, one might use:

$$P(s) = P_{inv,left} + s \times (P_{inv,right} - P_{inv,left}) / M + \Delta P_{column}$$

where $s$ is the column number, and $\Delta P_{column}$ can be either $\Delta P_{column,left}$ or $\Delta P_{column}$, right which should be equivalent. This principle can be easily adapted to two- or more-dimensional interpolation, and to interpolation along more coordinate directions.

Alternatively to using interpolation, one can simply use the worse of the two (or more) parameters, accepting little pessimism for reduced complexity. Yet another way is to account 50% of all paths to the one edge and 50% to the other edge. This decreases the pessimism yet keeping the risk of optimism extremely low.

**Re-sampling**

Up to now it has been assumed that step one of the method produces a table for representing $\Delta P$. The number of entries or variants is N. It is clear that with increasing number of N, more confidence is gained on the distribution and thus more confidence of the final result. Naturally, the price for N is CPU time as every variant costs a simulation run.

In accordance with embodiments of the present invention, N may be increased by fitting a representative distribution function to the samples, and then pick from this distribution function rather than from the small table.

**Operating modes**

Exploring different operating modes (voltage, temperature) usually requires re-simulation for accurate results. Yet array samples with different operating modes should correlate. Therefore, the transistor parameter variations may be kept locked during simulation of different modes in process 1. Alternatively, the generated spice netlists can be kept and re-simulated with different settings for the modes. In order for process two to produce correlated arrays among the modes, a fixed random seed may be set such that the computer random number generator produces the same sequence of random numbers which are used for indexing the parameter tables. This way it is made sure that the same arrays with different modes are built from the same building blocks.

Alternatively, the corresponding statistical sampling tables, e.g. (enhanced) Monte Carlo tables, for the different modes could be horizontally merged (putting all tables for the same building block side by side, forming a wider table) before starting process 2. When a redundancy sets in for a certain mode, it is locked and applied for every mode. Since a mode parameter change is valid for all basic elements (as opposed to a local parameter fluctuation of a basic element), a response surface model may be built on the invariable netlist and applied to all variants in order to save simulation time.

**Using Exponent Monte Carlo**

Exponent Monte Carlo is an accelerated Monte Carlo technique which decreases the number of simulations required, especially in the CPU-intensive first part of the method. It can be easily deployed in the method according to embodiments of the present invention by extending the described Monte Carlo tables by a probability (or weight) parameter which assigns a relative weight to every sample produced. This weight depends on the weights of the basic elements in process one, and on the statistical enhancement technique used. Generating the index into the extended Monte Carlo tables now also must take the weights into account.

**Circuit classes**

The method according to embodiments of the present invention was exercised on semiconductor memories. These comprise embedded and discrete memories, static and dynamic memories, volatile, non-volatile, (ternary) (range checking) content-addressable, and read-only memories. The concept is more generally equally applicable to any circuit which is modeled such that repeated instantiations of building blocks are missing to increase the simulation speed. These comprise all circuits with array or vector structure, e.g. pixel arrays in sensor chips, mixed-signal circuits such as A/D or D/A converters with many parallel paths, networks on chip (NoC), routers, switch arrays, decoders, FPGAs, processor fabrics, or arithmetic logic.

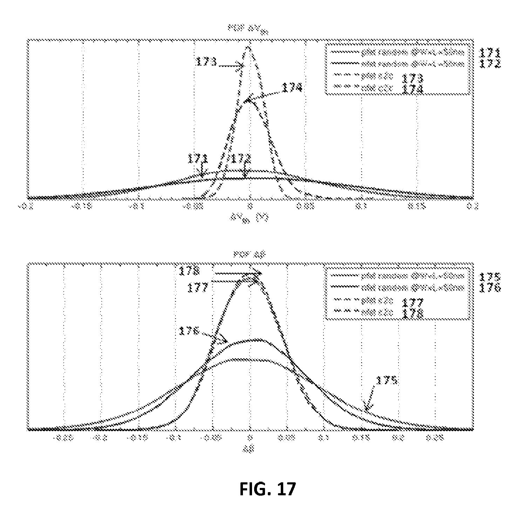

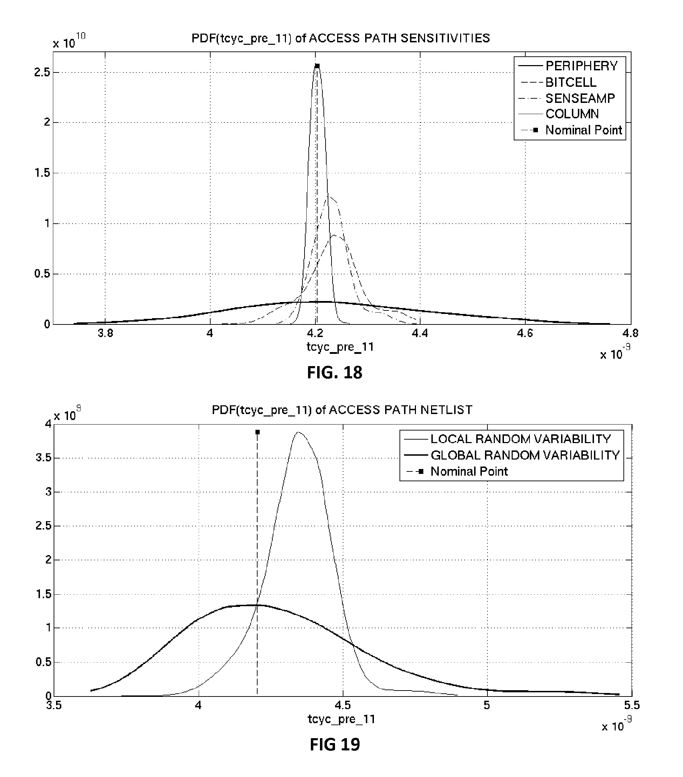

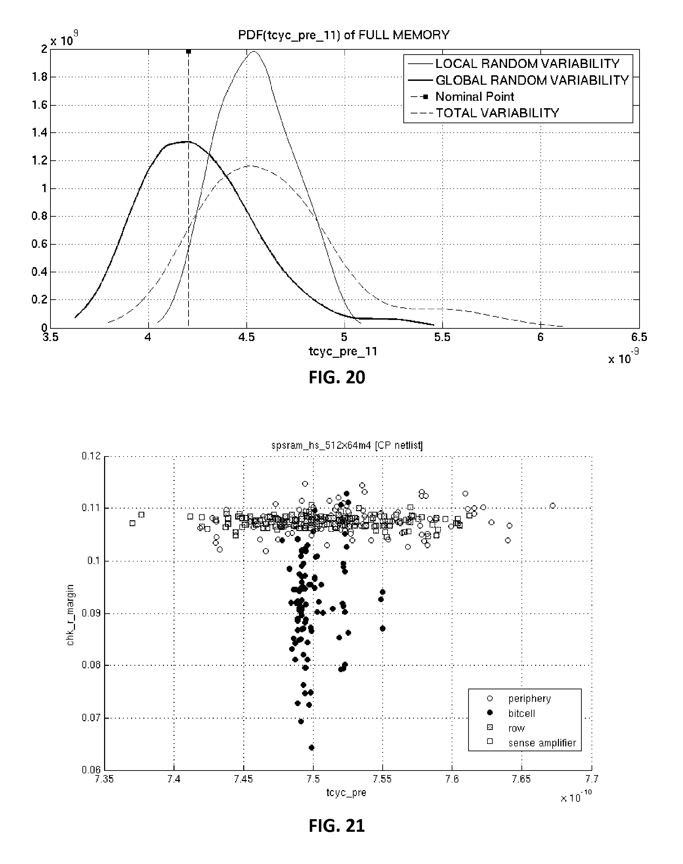

In order to assess the usefulness of the method, results are presented on an industrial memory example. The technology is an industrial 45nm technology with process variations supplied by a leading semiconductor company and shown in FIG. 17. The memory used carries the label hs-spsram_uhd_4096x64m8 which means it stores 4096 words of 64bits, with 4 words in a row. FIG. 17 illustrates in the top part variability on threshold voltage due to local process variations in pfets (graph 171) and in nfets (graph 172) and due to gloabal variability in pfets (graph 173) and in nfets (graph 174). FIG. 17 illustrates in the bottom part variability on gain due to local process variations in pfets (graph 175) and in nfets (graph 176) and due to global variability in pfets (graph 177) and in nfets (graph 178). No redundancy mechanisms were assumed at first. FIG. 18 and FIG. 19 show the outcome of step 1. From the more than one hundred available parameters P the cycle time of the memory was selected. The Figures show the invariable value $P_{inv}$, and the probability density functions (PDF) of the access path netlist cycle time sensitivity due to variability in building blocks $P_i$ (FIG. 18), and for the total AP netlist $P_{loc}$, and $P_{glob}$, displayed in seconds (s) (FIG. 19). After also running step 2, the distribution of P is obtained for the entire memory. It is shown in FIG. 20. The shift of the cycle time caused by local process variations can be clearly seen.

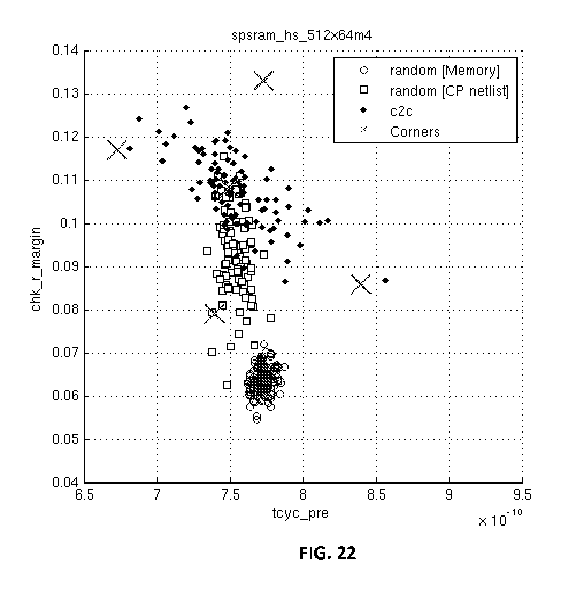

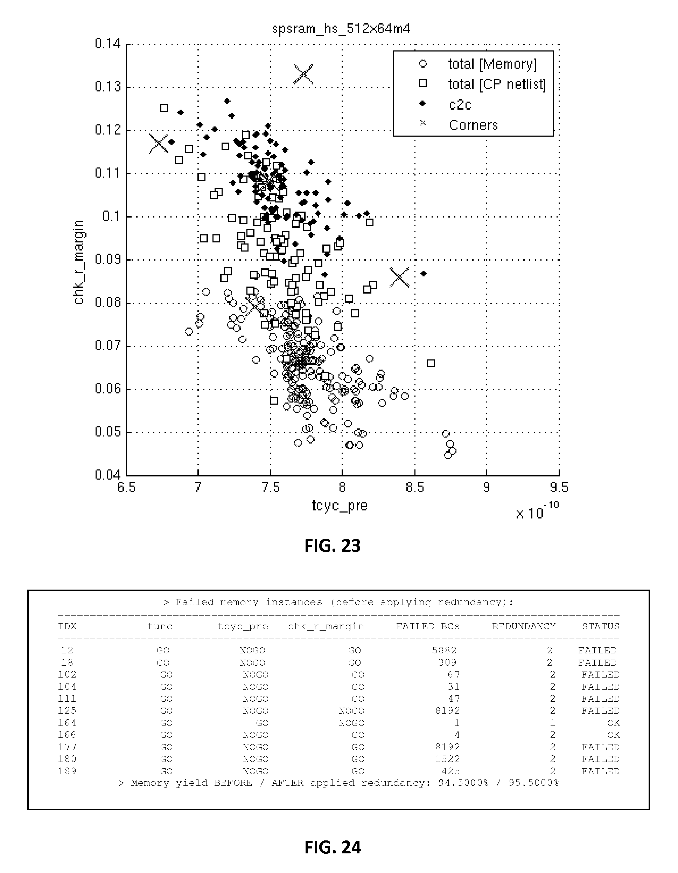

FIG. 21 to FIG. 23 show that the correlation between any two parameters, in the example again the cycle time was used, and correlated to the read margin, is preserved both in step one and step two. This time, results for a high speed 512x64m4 memory are shown. It is easy to see that for the read margin, the MIN operator was applied. This is clear as the smaller the read margin the worse for a safe activation of the sense amplifier. In addition, FIG. 22 shows a comparison to a corner-simulation (see Background section) as done in industry today. The selection of the corners seems to be safe for the access path netlist but is too optimistic for the scaled memory results. Especially the read margin can be much lower than the corner with the lowest read margin. It is now assumed that the memory has two redundant rows and an assumed tester constraint is set to 0.82ns cycle time. In addition, a minimum limit is set on the read margin to 45mV. FIG. 24 shows a log file of process two for the first 200 memory samples with activated redundancy mechanism.

The foregoing description details certain embodiments of the invention. It will be appreciated, however, that no matter how detailed the foregoing appears in text, the invention may be practiced in many ways. It should be noted that the use of particular terminology when describing certain features or aspects of the invention should not be taken to imply that the terminology is being re-defined herein to be restricted to including any specific characteristics of the features or aspects of the invention with which that terminology is associated.

While the above detailed description has shown, described, and pointed out novel features of the invention as applied to various embodiments, it will be understood that various omissions, substitutions, and changes in the form and details of the device or process illustrated may be made by those skilled in the technology without departing from the spirit of the invention.

**Claims**

1. Method for analyzing a performance metric of an array type of electronic circuit (30) under process variability effects, the array type of electronic circuit (30) comprising an array with a plurality of array elements (33), an access path being a model of the array type of electronic circuit (30), the model comprising building blocks (31, 32, 33, 34) containing all hardware to access one array element (33) in the array, each building block (31, 32, 33, 34) comprising at least one basic element,

   the method comprising
   deriving (20) statistics of the access path due to variations in the building blocks under process variability of the basic elements, and
   deriving statistics of the full array type of electronic circuit by combining the results of the statistics of the access path under awareness of the array architecture.

2. Method according to claim 1, wherein combining the results of the statistics of the access path under awareness of the array architecture includes taking into account a specification of the instance count and the connectivity of the building blocks.

3. Method according to any of the previous claims, wherein deriving statistics of the access path comprises injecting into the basic elements of a building block variability that can occur under process variations, and simulating the thus modified access path.

4. Method according to claim 3, wherein variability is injected into the basic elements of one building block at a time, the other building blocks of the access path remaining invariant with respect to their nominal case.

5. Method according to any of claims 3 or 4, wherein deriving statistics of the access path due to variations in the building blocks comprises a statistical sampling technique.

6. Method according to any of any of the previous claims, furthermore comprising recording resulting sensitivity populations of the access path.

7. Method according to any of the previous claims, wherein the step of deriving statistics of the full array type of electronic circuit comprises any statistical sampling loop.

8. Method according to any of the previous claims, wherein deriving statistics of the access path to variations in the building blocks comprises combining building block sensitivities.

9. Method according to any of the previous claims, wherein deriving statistics of the full array type of electronic circuit comprises
   generating a template of the array type of electronic circuit including all paths through the circuit,
   creating a random observation of the electronic circuit following this template,
   repeating at least once the step of creating a random observation of the electronic circuit with different random sequences to generate an electronic circuit population.

10. Method according to claim 9, wherein creating a random observation of the electronic circuit comprises
    for each building block of the electronic circuit selecting one random sample from the obtained sensitivity data,
    combining the thus-obtained samples, and

deriving a corresponding path performance metric for every path in the electronic circuit.

11. Method according to claim 10, furthermore comprising evaluating a path performance metric for every path in the electronic circuit, and selecting the combination of building blocks corresponding to the worst-case value of this path performance metric.

12. Method according to any of claims 10 to 11, wherein deriving statistics of the full array type of electronic circuit furthermore comprises scaling the path performance metrics into an observation of the electronic circuit performance, using any of MAX, MIN, AVG, SUM, AND, OR operators.

13. Method according to any of claims 9 to 12, wherein generating a template of the array type of electronic circuit comprises including redundant paths in the template.

14. Method according to claim 13 in as far as dependent on claim 11, furthermore comprising, after evaluating the path performance metric for every path in the electronic circuit, replacing the path corresponding to the worst-case value of this path performance metric by a redundant path if the path performance metric of this redundant path is better than this worst-case path performance metric.

15. A computer-readable medium having stored thereon a program which, when executed on a computer, performs the method according to any of the previous claims.

16. A system for analyzing a performance metric of an array type of electronic circuit under process variability effects, the array type of electronic circuit (30) comprising an array with a plurality of array elements (33), an access path being a model of the array type of electronic circuit (30), the model comprising building blocks (31, 32, 33, 34) containing all hardware to access one array element (33) in the array, each building block (31, 32, 33, 34) comprising at least one basic element, the system comprising
first calculation means arranged for deriving (20) statistics of the access path due to variations in the building blocks under process variability of the basic elements, and
second calculation means arranged for deriving statistics of the full array type of electronic circuit by combining the results of the statistics of the access path under awareness of the array architecture.

**FIG. 1**

Statistical Array

Phase II:
Architecture
Aware Scaling:
AP → Full array        21

Access Path (AP)
statistics + Pass/fail
statistics

Phase I:
Characterization
with Vaccinate +
Spice        20

AccessPath Netlist +
Basic element variability

**FIG. 2**

Not in same
path        32        33        30

31

bitcells        31

32        31

Not in same
path        32        31

32        33

Word line
driver

● worst        34        34        Sense amps

34        34

**FIG. 3**

FIG. 4

Correlation Plot

FIG. 5

**FIG. 6**

FIG. 7

Periphery
$C_0=(1)$

2 Words per Row $C_2=(1,2)$
(Hardware under variability is column selector slice)

Bits of one word

1 (of 16) Bitcells
$C_5=C0^*C1^*C2^*C3$

(generates control signals for column selectors, IO blocks and wordlines)

1 (of 4) Column Multiplexer slices

$C_4=C2^*C3$

4 Word line drivers
$C_1=(1,2,3,4)$

2 IO-Blocks (=Sense amps, RW/logic, output buffers). Equivalent to bits per word)

$C_3=(1,2)$

**FIG. 8**

| Primary Coordinates | | | | Dependent Coordinates | |
|---|---|---|---|---|---|
| (C0, | C1, | C2, | C3, | C4, | C5) |
| (1, | 1, | 1, | 1, | 1, | 1) |
| (1, | 2, | 1, | 1, | 1, | 2) |
| (1, | 3, | 1, | 1, | 1, | 3) |
| (1, | 4, | 1, | 1, | 1, | 4) |
| (1, | 1, | 2, | 1, | 2, | 5) |
| (1, | 2, | 2, | 1, | 2, | 6) |
| (1, | 3, | 2, | 1, | 2, | 7) |
| (1, | 4, | 2, | 1, | 2, | 8) |
| (1, | 1, | 1, | 2, | 3, | 9) |
| (1, | 2, | 1, | 2, | 3, | 10) |
| (1, | 3, | 1, | 2, | 3, | 11) |
| (1, | 4, | 1, | 2, | 3, | 12) |
| (1, | 1, | 2, | 2, | 4, | 13) |
| (1, | 2, | 2, | 2, | 4, | 14) |
| (1, | 3, | 2, | 2, | 4, | 15) |
| (1, | 4, | 2, | 2, | 4, | 16) |

**FIG. 9**

FIG. 10

**FIG. 11**

FIG. 12

| (C0. C1. C2. C3. C4. C5) | V_WRITE | W_MARGIN |
|---|---|---|
| (1. 1. 1. 1. 1. 1) | 9.870e-02 | 2.512e-09 |
| (1. 2. 1. 1. 1. 2) | 1.248e-01 | 2.609e-09 |
| (1. 3. 1. 1. 1. 3) | 1.418e-01 | 2.624e-09 |
| (1. 4. 1. 1. 1. 4) | 1.267e-01 | 2.603e-09 |
| (1. 1. 2. 1. 2. 5) | 1.395e-01 | 2.558e-09 |
| (1. 2. 2. 1. 2. 6) | 7.011e-02 | 2.552e-09 |
| (1. 3. 2. 1. 2. 7) | 8.197e-02 | 2.566e-09 |
| (1. 4. 2. 1. 2. 8) | 1.497e-01 | 2.582e-09 |
| (1. 1. 1. 2. 3. 9) | 1.205e-01 | 2.535e-09 |
| (1. 2. 1. 2. 3. 10) | 9.590e-02 | 2.515e-09 |
| (1. 3. 1. 2. 3. 11) | 1.879e-01 | 2.505e-09 |
| (1. 4. 1. 2. 3. 12) | 7.141e-02 | 2.479e-09 |
| (1. 1. 2. 2. 4. 13) | 1.426e-01 | 2.574e-09 |
| (1. 2. 2. 2. 4. 14) | 1.115e-01 | 2.588e-09 |
| (1. 3. 2. 2. 4. 15) | 1.617e-01 | 2.611e-09 |
| (1. 4. 2. 2. 4. 16) | 8.510e-02 | 2.492e-09 |
| **UNIT** | **Volt** | **sec** |
| **RULE R** | **MAX** | **MIN** |
| **MEMORY Performance** | 1.879e-01 | 2.479e-09 |

FIG. 13

| (C0, C3, C2, C1, C4, C5) | V_WRITE | W_MARG | YIELD | PWR | V_READ | T_ACC |
|---|---|---|---|---|---|---|
| (1, 1, 1, 1, 1, 1) | 9.870e-02 | 2.512e-09 | 1 | 20 | 1.383e-01 | 3.650e-09 |
| (1, 1, 1, 2, 1, 2) | 1.248e-01 | 2.609e-09 | 1 | 22 | 2.010e-01 | 3.649e-09 |
| (1, 1, 1, 3, 1, 3) | 1.418e-01 | 2.624e-09 | 1 | 19 | 2.274e-01 | 3.662e-09 |
| (1, 1, 1, 4, 1, 4) | 1.267e-01 | 2.603e-09 | 1 | 17 | 2.037e-01 | 3.641e-09 |
| (1, 1, 2, 1, 2, 5) | 1.395e-01 | 2.558e-09 | 1 | 19 | 2.266e-01 | 3.623e-09 |
| (1, 1, 2, 2, 2, 6) | 7.011e-02 | 2.552e-09 | 1 | 22 | 1.662e-01 | 3.635e-09 |
| (1, 1, 2, 3, 2, 7) | 8.197e-02 | 2.566e-09 | 1 | 21 | 1.579e-01 | 3.627e-09 |
| (1, 1, 2, 4, 2, 8) | 1.497e-01 | 2.582e-09 | 1 | 20 | 1.989e-01 | 3.607e-09 |
| (1, 2, 1, 1, 3, 9) | 1.205e-01 | 2.535e-09 | 1 | 22 | 1.630e-01 | 3.631e-09 |
| (1, 2, 1, 2, 3, 10) | 9.590e-02 | 2.515e-09 | 1 | 22 | 1.140e-01 | 3.650e-09 |
| (1, 2, 1, 3, 3, 11) | 1.879e-01 | 2.505e-09 | 1 | 19 | 2.180e-01 | 3.643e-09 |
| (1, 2, 1, 4, 3, 12) | 7.141e-02 | 2.479e-09 | 1 | 23 | 1.247e-01 | 3.611e-09 |
| (1, 2, 2, 1, 4, 13) | 1.426e-01 | 2.574e-09 | 1 | 24 | 2.107e-01 | 3.607e-09 |
| (1, 2, 2, 2, 4, 14) | 1.115e-01 | 2.588e-09 | 1 | 19 | 1.625e-01 | 3.602e-09 |
| (1, 2, 2, 3, 4, 15) | 1.617e-01 | 2.611e-09 | 1 | 20 | 2.172e-01 | 3.622e-09 |
| (1, 2, 2, 4, 4, 16) | 8.510e-02 | 2.492e-09 | 1 | 20 | 1.475e-01 | 3.615e-09 |
| UNIT Scaling RULER | Volt MAX | sec MIN | ¨ AND | pJ AVG | Volt MIN | sec MAX |
| MEMORY Performance | 1.879e-01 | 2.479e-09 | 1(GO) | 20.56 | 1.140e-01 | 3.662e-09 |

**FIG. 14**

FIG. 15

※ Original coordinate

| | | |
|---|---|---|
| C | Row | (1..4 |
| C | Word | (1..2 |
| C | Bit | (1..2 |

※ With 2 banks, banks share word drivers and sense

| | | |
|---|---|---|
| C | Row | (1..4 |
| C | Word | (1..2 |
| C | Bit | (1..2 |
| C | Bank | (1..2 |

※ With 2 banks, banks have word line drivers and share amps

| | | |
|---|---|---|
| C | Row | (1..4 |
| C | Word | (1..2 |
| C | Bit | (1..2 |
| C | Bank | (1..2 |
| C | Row_to | C1*C |

C5 is a dependent coordinate (It has an own building which is the word line driver, but multiplicity derived from

※ With 2 banks, banks have word line drivers and sense

| | | | |
|---|---|---|---|
| C | Row | | (1..4 |
| C | Word | | (1..2 |
| C | Bit | | (1..2 |
| C | Bank | | (1..2 |
| C | Row_tota | C1*C | |
| C | Bits_tota | C3*C | |

Both C5 and C6 are dependent coordinates (C5 word line driver building block, C6 is sense amp building

※ Two words are decoded in output is multiplexed into one

| | | | |
|---|---|---|---|
| C | Row | | (1..4 |
| C | Word | | (1..2 |
| C | Bit | | (1..2 |
| C | Bits_tota | C2*C | |

The C4 coordinate corresponds to the building block of sense amp. The C2 coordinate corresponds the output multiplexer selection signal building

**FIG. 16**

FIG. 17

**FIG. 18**

**FIG 19**

**FIG. 20**

**FIG. 21**

spsram_hs_512x64m4

**FIG. 22**

**FIG. 23**

```
          > Failed memory instances (before applying redundancy):
=================================================================================
IDX        func        tcyc_pre    chk_r_margin     FAILED BCs    REDUNDANCY    STATUS
---------------------------------------------------------------------------------
 12         GO          NOGO          GO                5882           2        FAILED
 18         GO          NOGO          GO                 309           2        FAILED
102         GO          NOGO          GO                  67           2        FAILED
104         GO          NOGO          GO                  31           2        FAILED
111         GO          NOGO          GO                  47           2        FAILED
125         GO          NOGO        NOGO                8192           2        FAILED
164         GO            GO        NOGO                   1           1            OK
166         GO          NOGO          GO                   4           2            OK
177         GO          NOGO          GO                8192           2        FAILED
180         GO          NOGO          GO                1522           2        FAILED
189         GO          NOGO          GO                 425           2        FAILED
          > Memory yield BEFORE / AFTER applied redundancy: 94.5000% / 95.5000%
```

**FIG. 24**

# EP 2 234 026 A1

Europäisches
Patentamt

European
Patent Office

Office européen
des brevets

## EUROPEAN SEARCH REPORT

**Application Number**

EP 10 15 7462

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUA WANG ET AL: "Systematic Analysis of Energy and Delay Impact of Very Deep Submicron Process Variability Effects in Embedded SRAM Modules" DESIGN, AUTOMATION AND TEST IN EUROPE, 2005. PROCEEDINGS MUNICH, GERMANY 07-11 MARCH 2005, PISCATAWAY, NJ, USA,IEEE, 7 March 2005 (2005-03-07), pages 914-919, XP010780147 ISBN: 978-0-7695-2288-3 * page 914 - page 917 * ----- | 1-16 | INV. G06F17/50 |
| X | QIKAI CHEN ET AL: "Modeling and Testing of SRAM for New Failure Mechanisms Due to Process Variations in Nanoscale CMOS" VLSI TEST SYMPOSIUM, 2005. PROCEEDINGS. 23RD IEEE PALM SPRINGS, CA, USA 01-05 MAY 2005, PISCATAWAY, NJ, USA,IEEE LNKD-DOI:10.1109/VTS.2005.58, 1 May 2005 (2005-05-01), pages 292-297, XP010809197 ISBN: 978-0-7695-2314-9 * page 292 - page 293 * ----- | 1-16 | |
| X | GRABNER T ET AL: "Yield prediction for architecture exploration in nanometer technology nodes:: a model and case study for memory organizations" CODES + ISSS 2006. INTERNATIONAL CONFERENCE ON HARDWARE/SOFTWARE CODESIGN & SYSTEM SYNTHESIS. SEOUL, KOREA, OCT. 22 - 25, 2006; [INTERNATIONAL CONFERENCE ON HARDWARE/SOFTWARE CODESIGN AND SYSTEM SYNTHESIS], NEW YORK, NY : ACM, US, 1 October 2006 (2006-10-01), pages 253-258, XP031119363 ISBN: 978-1-59593-370-6 * page 253 - page 257 * ----- -/-- | 1-16 | TECHNICAL FIELDS SEARCHED (IPC) G06F |

The present search report has been drawn up for all claims

| Place of search | Date of completion of the search | Examiner |
|---|---|---|
| Munich | 9 July 2010 | Alonso Nogueiro, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 10 15 7462

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/005707 A1 (PAPANIKOLAOU ANTONIS [GR] ET AL) 3 January 2008 (2008-01-03) * abstract * * paragraph [0098] - paragraph [0128] * | 1-16 | |
| A | MIRANDA M ET AL: "Variability aware modeling of SoCs: From device variations to manufactured system yield" QUALITY OF ELECTRONIC DESIGN, 2009. ISQED 2009. QUALITY OF ELECTRONIC DESIGN, IEEE, PISCATAWAY, NJ, USA, 16 March 2009 (2009-03-16), pages 547-553, XP031446386 ISBN: 978-1-4244-2952-3 * page 547 - page 551 * | 1-16 | |
| A | US 2005/235232 A1 (PAPANIKOLAOU ANTONIS [BE] ET AL) 20 October 2005 (2005-10-20) * abstract * * paragraph [0174] - paragraph [0198] * | 1-16 | |

TECHNICAL FIELDS SEARCHED (IPC)

The present search report has been drawn up for all claims

| Place of search | Date of completion of the search | Examiner |
|---|---|---|
| Munich | 9 July 2010 | Alonso Nogueiro, L |

**ANNEX TO THE EUROPEAN SEARCH REPORT**
**ON EUROPEAN PATENT APPLICATION NO.**                    EP 10 15 7462

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2010

| Patent document cited in search report | | Publication date | Patent family member(s) | | Publication date |
|---|---|---|---|---|---|
| US 2008005707 | A1 | 03-01-2008 | EP | 1873665 A1 | 02-01-2008 |
| US 2005235232 | A1 | 20-10-2005 | US | 2006253204 A1 | 09-11-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080005707 A

### Non-patent literature cited in the description

- **Aitken R. ; Idgunji S.** Worst-Case Design and Margin for Embedded SRAM. *Automation & Test in Europe Conference and Exhibition,* April 2007
- **Peter R. Kinget.** Device mismatch and tradeoffs in the design of analog circuits. *IEEE Journal of Solid-State Circuits,* June 2005, vol. 40 (6
- **Hector Hung et al.** Monte Carlo Simulation of Device Variations and Mismatch in Analog Integrated circuits. *Proceedings of the National Conference on Undergraduate Research (NCUR) 2006,* 06 April 2006